# EUROPEAN PATENT SPECIFICATION

(11) **EP 3 941 957 B1**
(45) Date of publication and mention of the grant of the patent: **31.12.2025**
(21) Application number: 20710547.9
(22) Date of filing: 17.03.2020
(51) Int. Cl.: C08G 18/79, C08G 18/62, C08G 18/22, C08G 18/24, C09D 175/04, C08L 75/04, C08F 220/20, C09D 133/06

(54) **NON-AQUEOUS CROSSLINKABLE COMPOSITION**
NICHTWÄSSRIGE VERNETZBARE ZUSAMMENSETZUNG
COMPOSITION RÉTICULABLE NON AQUEUSE

(30) Priority: 18.03.2019 EP 19163479
(43) Date of publication of application: 26.01.2022
(73) Proprietor: Allnex Netherlands B.V., 4612 RB Bergen op Zoom (NL)
(72) Inventor: DE WOLF, Elwin, 4631 PP Hoogerheide (NL); ANDRINGA, Heert, 4691 DL Tholen (NL); KOEVOETS, Jacobus, 4625 CC Bergen op Zoom (NL)
(74) Representative: Boon, Greet
(86) International application number: PCT/EP2020/057328
(87) International publication number: WO 2020/187928

(56) References cited:
- US-A- 5 916 938
- US-A1- 2017 066 943

## Description

The present invention relates to a polyol component comprising a polyacrylate polyol, a crosslinkable composition comprising the polyol component, and its use in coatings.

Two component polyurethane coatings are well-known in the art. Usually, they are formulated as two-pack systems, the first pack normally containing a polyol resin and the second pack comprising a crosslinking agent, often a polyisocyanate. After mixing of the two packs, the crosslinking reaction starts, resulting in an increase of the viscosity of the composition. Here, the time in which the viscosity is increased by 2 or 4 seconds DIN Flow Cup 4 relative to the initial viscosity is referred to as the working time. The time in which the viscosity is doubled is called the pot life. To allow users of two-pack systems to work as efficiently as possible, both working time and pot life should be as long as possible.

Rapid curing of the two-pack composition is often desired to increase productivity. For environmental as well as economic reasons, drying at elevated temperatures (e.g. 60°C) should be as short as possible. Alternatively, curing is preferred at lower but still elevated temperatures (e.g. 40°C instead of 60°C). Ideally, curing is performed without heating and at ambient temperature in less than 1.5 h to enable fast polishability, handling or sanding of a coating. However, when the drying time is decreased (or the cure speed is increased), often the working time and the pot life are decreased as well, reducing the quality of the cured material. Therefore, there is a need to have a good balance between pot-life and/or working time and drying time and the ratio between pot-life and/or working time to drying time should be as high as possible.

For High Solids (HS) coating systems, having a Volatile Organic Content (VOC) lower than 420 g/L, fast curing can for example be achieved by using polyaspartic binders, as described in WO 2014/151307. However, these systems are generally known to have a very short pot life and a very unfavorable balance between pot-life and drying time. Furthermore, the drying time for these systems usually highly depends on the relative humidity, which is undesirable in applications where robustness is required. Also, their durability with regard to gloss retention is often not acceptable for many paint applications.

Often, in HS crosslinkable compositions described in the art comprising a polyol and a polyisocyanate, polyacrylate polyols are used comprising esters of acrylic acid and an alcohol with a bulky cycloaliphatic moiety (for example isobornyl methacrylate (IBOMA)) as monomer. Short drying time and good balance between pot-life and drying time can be achieved with such systems. However, as IBOMA is usually obtained from natural resources, the quality and purity of IBOMA are, with today's production and purification processes, not always reproducible enough to guarantee high quality polyacrylate resins. This may result in for example deviating color or smell of the polyacrylate resin and makes the use of such a bulky monomer in polyacrylate polyols economically less attractive for certain applications where high quality polyacrylate resins are needed. Moreover, as IBOMA is a biobased material, its availability is decreasing in time.

WO 03/025040 for example discloses hydroxy functional binder resins, such as an acrylic polyol or a tetra hydroxy functional oligomer, which are utilized in crosslinkable coating compositions together with biuret group-containing isocyanate curing agents. Coating films formed from the compositions described in this document exhibit fast drying times. However, using the acrylic polyol as binder resin, the hardness values of the coatings measured after 1 day were very low (Example 8 and 11), which is not accepted anymore in today's coating practice. Furthermore, the prepared clear coat composition using the acrylic polyol as binder resin was only 43% solids, hence enabling the formulation of medium solids coatings only.

US 5,286,782 discloses clear coating compositions which cure at ambient temperatures having 30-70% by weight of film forming binder solids content. Fast curing of the formed coatings is obtained by using caprolactone-based oligomeric polyester polyol in the polyol component of the coating composition. However, examples given in this document are not VOC compliant for HS coating formulations. The weight average molecular weight of the acrylic polymer binder is thereby described as being between 4,000 and 25,000. Furthermore, the pot life of the given formulations is expected to be extremely short.

WO 2005/019362 describes low or ambient temperature curable coating compositions with tack-free times of less than 1 hour. Here, tack-free time is defined as the time required for the film to sufficiently dry so that a finger placed on the surface does not detect any tackiness in the film. More particularly, it refers to the length of time between when a coating is applied to a substrate and when the coating no longer feels sticky when touched. It is generally known for the skilled in the art that the time between this tack-free stage and the through-dry stage of a coating can be long. Therefore, it is expected that for coating films formed from the compositions described in this document, the time needed for the films to be polishable is long as well, which is not acceptable according to today's standard.

EP 2 822 983 describes coating compositions with touch dry times of 1 h and sufficient pot life. However, acceptable hardness values (Example 2) were only achieved by using a very high level of tin-catalyst, such high level being unacceptable from a health and safety point of view.

US 5,916,938 describes a coating composition which contains organic solvent and is based on a solution of a polyacrylate resin (A) in one or more organic solvents, containing one or more organic phosphites.

US 2017/066943 describes non-aqueous coating material compositions comprising at least one polyhydroxyl group-containing component (A) and at least one polyisocyanate group-containing component (B), and related coatings.

Therefore, a need still exists for a high solids crosslinkable coating composition (with VOC being lower than 420 g/L) providing acceptable drying times at 22 °C and giving a good balance between pot life and drying time as well as good (early) hardness.

Applicants have found crosslinkable compositions that overcome the drawbacks encountered with the compositions described in the art up to now and that provide the combination of properties as here above described. The invention is defined by the appended claims. According to an aspect of the present invention, there is therefore provided a polyol component comprising at least one polyacrylate polyol (or (meth)acrylic polyol) (A) obtained from:
- 10 to 80 wt% of hydroxyalkyl(meth)acrylate monomers (a1), wherein the alkyl group contains from 1 to 20 carbon atoms, preferably from 1 to 12 carbon atoms;
- 0 to 50 wt% of linear alkyl(meth)acrylate monomers (a2) wherein the alkyl group contains from 1 to 20 carbon atoms, preferably from 1 to 12 carbon atoms;
- more than 10 wt% of branched alkyl(meth)acrylate monomers (a3) wherein the alkyl group contains from 3 to 20 carbon atoms, preferably from 3 to 12 carbon atoms;
- 15 to 60 wt% of vinyl monomers (a4), preferably (substituted) styrene; and
- optionally from 0 to 15 wt % of (substituted) cycloaliphatic (meth)acrylate monomers (a5), preferably from 0 to 10 wt%, more preferably from 0 to 5 wt%; preferably the cycloaliphatic group of the (substituted) cycloaliphatic (meth)acrylate (a5), if present, contains from 5 to 16 carbon atoms, more preferably from 6 to 12 carbon atoms,
   more preferably the cycloaliphatic group of the (substituted) cycloaliphatic (meth)acrylate (a5), if present, comprises a (substituted) cycloalkyl moiety, a (substituted) bicyclo[x.y.z]alkyl moiety or a (substituted) tricyclo[x.y.z₁.z₂]alkyl moiety (the sum of x + y + z + 2, or x + y + z₁ + z₂ + 2 being equal to the total number of carbon atoms in the cycloaliphatic moiety);
- optionally from 0 to 1 wt% (meth)acrylic acid (a6), preferably from 0 to 0.6 wt% (meth)acrylic acid, more preferably from 0 to 0.5 wt% (meth)acrylic acid, even more preferably from 0 to 0.15 wt% (meth)acrylic acid, most preferably the polyacrylate polyol (A) is substantially free from (meth)acrylic acid;
   based on the sum of (a1), (a2), (a3), (a4), and, if present, (a5) and (a6), being 100 wt%;
   the polyacrylate polyol (A) having:
      - a number averaged molecular weight Mn of between 800 and 2,100 Dalton, preferably between 800 and 1,900 Dalton, more preferably between 800 and 1,700 Dalton;
      - a weight averaged molecular weight Mw of between 1,500 and 4,000 Dalton, preferably between 1,500 and 3,800 Dalton, more preferably between 1,500 and 3,500 Dalton;
      - an acid value of between 0 and 3.5 mg KOH/g polyol (A), preferably between 0 and 3 mg KOH/g polyol (A), more preferably between 0 and 2 mg KOH/g polyol (A), most preferably between 0 and 1.5 mg KOH/g polyol (A); and
      - a glass transition temperature Tg of between 8 and 60°C, more preferably of between 10 and 50°C, even more preferably of between 12 and 40°C.

In the context of the present description, crosslinkable coating composition is also referred to as crosslinkable composition or coating composition.

In the context of the present description, (substituted) cycloaliphatic (meth)acrylate monomers refer to (substituted) cycloalkyl(meth)acrylate monomers, or to (substituted) bicyclo[x.y.z]alkyl(meth)acrylate monomers or (substituted) tricyclo[x.y.z₁.z₂]alkyl(meth)acrylate monomers, the sum of x + y + zₙ + 2 (i.e. x + y + z + 2, or x + y + z₁ + z₂ + 2) being equal to the total number of carbon atoms in the cycloaliphatic moiety. The (substituted) cycloaliphatic (meth)acrylate monomers are bulky monomers.

The prefix "(meth)acryl" when used to name compounds in the present description encompasses both "acryl" and "methacryl" and refers to compounds comprising at least one CH₂=CHCOO- group or CH₂=CCH₃COO- group, as well as mixtures thereof and mixtures of such compounds.

According to another aspect of the present invention, there is provided a crosslinkable composition comprising:
a) a polyol component according to the invention (as described here above);
b) optionally at least one polyol (B) being different from polyacrylate polyol (A) and comprising at least two free hydroxyl groups;
c) at least one polyisocyanate crosslinker (C) comprising free isocyanate groups;
d) at least one catalyst (D) for catalyzing the reaction between hydroxyl groups of polyacrylate polyol (A), if present polyol (B), and isocyanate groups of crosslinker (C), the catalyst (D) being present in an amount of between 0.01 and 0.4 wt% of the total amount of polyacrylate polyol (A), if present polyol (B), crosslinker (C), and catalyst (D), and, if present, pot life extender (E), anti-oxidant (F1), radical scavenger (F2), and/or anti-sagging agent (G); and
e) optionally at least one pot life extender (E),
f) optionally at least one anti-oxidant (F1) and/or at least one radical scavenger (F2),
g) optionally at least one anti-sagging agent (G).

Applicants have found that the use of such polyol component and crosslinkable composition allows to obtain a coating having very fast drying, an improved pot-life to drying time ratio, balanced with a long working time, and good (early) hardness. The composition is highly suitable to be formulated at a low content of volatile organic compounds and without highly toxic material. Furthermore, the resulting crosslinked material provides good resistance to chemicals and sunlight, is durable, has good mechanical properties and has an excellent appearance. It is particularly surprising that use of polyacrylate polyol (A) provides a better balance between VOC and early hardness compared to crosslinkable compositions described in the art. More particularly, the inclusion of linear and/or branched alkyl(meth)acrylates in the low molecular weight polyacrylate polyol (A), together with its low acid value and a high Tg, results in low VOC, high solids formulations, thereby avoiding the need for further dilution with solvents for spraying and hence avoiding increasing the VOC content of the composition. Moreover, with such formulations, coatings with good (early) hardness are obtained. Furthermore, in the polyacrylate polyol (A), the level of bulky monomers (such as cyclohexyl(meth)acrylate, isobornyl (meth)acrylate (IBOMA), norbornyl (meth)acrylate, etc.) is low, or such bulky monomers are preferably even not present. As such, by using the polyacrylate polyol (A), deviating colouring or smell of the resin, often caused in the art due to the presence of impurities in bulky monomers such as IBOMA, is minimized or even completely avoided.

The present composition is also particularly useful in formulating fast curing, low VOC, high solids solvent borne clear coat compositions for, for example, vehicle refinishes, for transportation vehicles as well as in flooring applications.

The composition according to the invention is preferably a so-called non-aqueous composition, referring to a composition comprising less than 10% of water, preferably less than 5 % of water, more preferably less than 1 % of water, or even substantially free of water (i.e. not containing water).

The polyol component according to the invention preferably comprises less than 10% of water, more preferably less than 5 % of water, most preferably less than 1 % of water or is even substantially free of water (i.e. not containing water).

In the context of the present description, polyacrylate polyol (A) refers to (meth)acrylic polyol (A). The polyacrylate polyol (A) used in the polyol component and composition according to the invention is preferably a polymer comprising at least 2 free hydroxyl (-OH) groups. The acrylic polyol (A) can be obtained, preferably in the presence of a free radical initiator, by the (co)polymerization of the following monomers and their amounts (or polyacrylate polyol (A) comprises residues formed from the (co-)polymerization of the following monomers and their amounts):
- 10 to 80 wt% of hydroxyalkyl(meth)acrylate monomers (a1), wherein the alkyl group contains from 1 to 20 carbon atoms, preferably from 1 to 12 carbon atoms, such as hydroxyethyl (meth)acrylate, hydroxypropyl (meth)acrylate, hydroxybutyl(meth)acrylate, adducts of hydroxyalkyl (meth)acrylates and caprolactone, or mixtures thereof;
- 0 to 50 wt% of linear alkyl(meth)acrylate monomers (a2) wherein the alkyl group contains from 1 to 20 carbon atoms, preferably from 1 to 12 carbon atoms, such as methyl (meth)acrylate, n-butyl (meth)acrylate, n-hexyl (meth)acrylate, n-octyl (meth)acrylate, lauryl (meth)acrylate, or mixtures thereof;
- more than 10 wt% of branched alkyl(meth)acrylate monomers (a3) wherein the alkyl group contains from 3 to 20 carbon atoms, preferably from 3 to 12 carbon atoms, such as isopropyl (meth)acrylate, isobutyl (meth)acrylate, 2-ethylhexyl (meth)acrylate, isooctyl (meth)acrylate, esters of (meth)acrylic acid and alcohols (available, for example, under the trade name ISOFOL^{®}), or mixtures thereof;
- 15 to 60 wt% of vinyl monomers (a4), such as styrene, or vinyl toluene, preferably styrene; and
- optionally from 0 to 15 wt % of (substituted) cycloaliphatic (meth)acrylate monomers (a5), preferably from 0 to 10 wt%, more preferably from 0 to 5 wt%; preferably the cycloaliphatic group of the (substituted) cycloaliphatic (meth)acrylate (a5), if present, contains from 5 to 16 carbon atoms, more preferably from 6 to 12 carbon atoms,
   more preferably the cycloaliphatic group of the (substituted) cycloaliphatic (meth)acrylate (a5), if present, comprises a (substituted) cycloalkyl moiety, a (substituted) bicyclo[x.y.z]alkyl moiety or a (substituted) tricyclo[x.y.z₁.z₂]alkyl moiety (the sum of x + y + z + 2, or x + y + z₁ + z₂ + 2 being equal to the total number of carbon atoms in the cycloaliphatic moiety),
- optionally from 0 to 1 wt% (meth)acrylic acid (a6), preferably from 0 to 0.6 wt% (meth)acrylic acid, more preferably from 0 to 0.5 wt% (meth)acrylic acid, even more preferably from 0 to 0.15 wt% (meth)acrylic acid, most preferably the polyacrylate polyol (A) is substantially free from (meth)acrylic acid (i.e. not containing (meth)acrylic acid);
based on the sum of (a1), (a2), (a3), (a4), and, if present, (a5) and (a6), being 100 wt%.

Non-limiting examples of (substituted) cycloaliphatic (meth)acrylate monomers (a5) containing a cycloaliphatic group with from 5 to 16 carbon atoms are (substituted) cyclopentyl (meth)acrylate, (substituted) cyclohexyl (meth)acrylate, (substituted) cycloheptyl (meth)acrylate, 3,3,5-trimethylcyclohexyl (meth)acrylate, isobornyl (meth)acrylate, (substituted) norbornyl (meth)acrylate, isomers of bicyclo[2.2.1]hept-5-en-2-yl)methyl (meth)acrylate, (substituted) adamantyl (meth)acrylate, (substituted) dicyclopentadiene (meth)acrylate, and (substituted) polycyclopentadienyl (meth)acrylate, and mixtures thereof.

Preferably, the monomer composition from which polyacrylate polyol (A) is obtained is substantially free from (substituted) cycloaliphatic (meth)acrylate monomers (a5). Here, substantially free refers to the monomer composition used to prepare polyacrylate polyol (A) not containing any (substituted) cycloaliphatic (meth)acrylate monomers (a5) at all. The polymerization reaction can be conducted in organic solution in the presence of known solvents. Examples include toluene, xylene, n-butyl acetate, ethyl acetate, ethyl glycol acetate, isomeric pentyl acetates, hexyl acetates, methoxypropyl acetates, tetrahydrofuran, dioxane, acetone, methyl ethyl ketone and methyl isobutyl ketone. Also suitable are mixtures of higher-boiling aromatic compounds, such as Solvent Naphtha solvents, homologs of benzene, the Solvesso solvents, the Shellsol solvents; and also high-boiling, aliphatic and cycloaliphatic hydrocarbons, such as white spirit, mineral turpentine, the Isopar solvents, the Nappar solvents, tetralin and decalin. Mixtures of solvents may also be used.

When the polymerization is conducted in a solvent, preferred solvents are n-butyl acetate, methoxypropyl acetate and xylene, as well as mixtures of these solvents. During the polymerization reaction, the solvents are generally used in amounts of 2 to 40% by weight, based on the weight of the reaction mixture. Depending upon the peroxide used, the polymerization temperature is generally between 90 and 220 °C., preferably between 100 and 190 °C.

The polymerizing step can include at least one polymerization initiator, wherein the polymerization initiator can be an oxidizing agent, or a metal complex. Suitable initiators preferably decompose into radicals at from 0 to 250 °C, preferably from 40 to 200 °C, and which can be used for initiating radical polymerization reactions. Suitable initiators are preferably those having a half-life between 0.05 minutes and 2 hours at the reaction temperature. The oxidizing agent can be selected from the group consisting of persulfate salts, sulphonyl peroxides, percarbonates, peresters, diacyl peroxides, dialkyl peroxides, ketal peroxides, alkyl hydroperoxides, and ketone peroxides, and mixtures thereof. Example of such initiators are sodium persulfate, potassium persulfate, ammonium persulfate, hydrogen peroxide, acetyl cyclohexane sulphonyl peroxide, dicyclohexyl peroxy dicarbonate, di-n-butyl peroxy dicarbonate, diisopropyl peroxy dicarbonate, t-butyl peroxy pivalate, t-butyl peroxy diethyl acetate, t-butyl peroxy isobutyrate, t-butyl perneodecanoate, t-butyl peroxy-3,5,5-trimethylhexanoate, t-butyl peroxy-2-ethylhexanoate, t-butyl perbenzoate, bis-(3,3,5-trimethyl-hexanoyl)-peroxide, dilauroyl peroxide, didecanoyl peroxide, dipropionyl peroxide, bis-(2,4-dichlorobenzoyl)-peroxide, dibenzoyl peroxide, dicumyl peroxide, di-t-butyl peroxide, di-t-amyl peroxide, 1,1-di-t-butyl peroxy-3,3,5-trimethyl cyclohexane, t-butylperoxy-3,3,5-trimethyl hexanoate, t-butylperoxyisopropyl carbonate, 1,1-di-t-butylperoxycyclohexane, cumene hydroperoxide, t-butyl hydroperoxide, cyclohexanone peroxide, ethyl methyl ketone peroxide, 2,2-di-t-butylperoxybutane, t-butylperoxystearyl carbonate, or mixtures thereof. Other initiators which may be utilized, include any of the various azo initiators, such as 2,2'-azobis(isobutyronitrile), 4,4'-azobis(4-cyanovaleric acid), 2,2'-azobis[2-methyl-N-(1,1-bis(hydroxymethyl)-2-(hydroxyethyl)]-propionamide, and 2,2'-azobis[2-methyl-N-(2-hydroxyethyl)]-propionamide, disulfides, tetrazenes, and other initiators known in the art. Preferred polymerization initiators are any of the peresters, diacyl peroxides, or dialkyl peroxides, or mixtures thereof.

The initiator may contain further additives, such as plasticizers, solvents and/or thixotropic agents. It is also possible to accelerate the decomposition of the initiator, for example the decomposition of diacyl peroxides can be accelerated by using for example amines and the decomposition of ketone peroxides and peresters by using for example, respectively, cobalt and vanadium salts.

The initiators are preferably used in an amount of 0.5 to 10, preferably 1 to 7, % by weight based on the total weight of the monomers.

The method of producing a polyacrylate polyol (A) can optionally further include a chain transfer agent, wherein the chain transfer agent can be a phosphorous compound, an alcohol, a mercaptan, or combinations thereof. The chain transfer agent can be added to the at least one monomer prior to the polymerizing step or during the polymerizing step. The method of producing a polymer can optionally further include a polymerization stabilizer in the polymerization step, wherein the polymerization stabilizer can for example be a thiazine compound. Exemplary thiazine compounds include phenol thiazine, diphenol thiazine, dimethyl diphenolthiazine, or combinations thereof.

The polyacrylate polyol (A) used in the polyol component and composition of the invention has a weight averaged molecular weight Mw of less than 4,000 Dalton, preferably less than 3,800 Dalton, more preferably less than 3,500 Dalton.

The number averaged molecular weight Mn of the polyacrylate polyol (A) is at most 2,100 Dalton, preferably at most 1,900 Dalton, more preferably at most 1,700 Dalton.

The polydispersity, defined as Mw/Mn, of the polyacrylate polyol (A) used in the polyol component and composition of the invention is preferably less than 3, more preferably less than 2.5, most preferably less than 2.

The weight averaged molecular weight Mw and number averaged molecular weight Mn are determined according to ASTM D 3593 standard by Gel Permeation Chromatography using polystyrene standards, more particularly using size exclusion chromatography.

The glass transition temperature Tg of the polyacrylate polyol (A) used in the polyol component and composition of the invention is higher than 8 °C, preferably higher than 10°C, more preferably higher than 12 °C (i.e. a glass transition temperature of 12°C or higher). The glass transition temperature Tg of the polyacrylate polyol (A) is lower than 60°C, more preferably lower than 50°C, even more preferably lower than 40°C.

The Tg is measured using Mettler DSC 822E calorimeter according to DIN EN ISO 16805 and ISO 11357.

The acid value (AV) of the polyacrylate polyol (A) used in the polyol component and composition of the invention is lower than 3.5 mg KOH per gram of polyol (A), preferably lower than 3 mg KOH per gram of polyol (A), more preferably lower than 2 than mg KOH per gram of polyol (A), most preferably lower than 1.5 mg KOH per gram of polyol (A). The polyacrylate polyol (A) used in the polyol component and composition of the invention has a hydroxyl value of between 60 and 300 mg KOH/g polyol (A), preferably between 80 and 280 mg KOH/g polyol (A), more preferably between 100 and 250 mg KOH/g polyol (A), and most preferably between 120 and 180 mg KOH/g polyol (A).

The hydroxyl value is measured according to the method ASTM E222-17 standard.

Preferably, the polyacrylate polyol (A) used in the polyol component and composition of the invention has a Mn of lower than 2,100 Dalton, a Mw of lower than 3,800 Dalton, a polydispersity lower than 2.5, an acid value of between 0 and 3 mg KOH/g polyol (A) and a glass transition temperature higher than 10°C.

The polyacrylate polyol (A) is preferably present in the composition at a level in the range of 10 to 90, more preferably in the range of 20 to 80, most preferably in the range of 30 to 70, percent by weight based on the total amount of polyacrylate polyol (A), polyol (B) if present, crosslinker (C), catalyst (D), and, if present, pot life extender (E). Optionally, the crosslinkable composition according to the invention comprises at least one polyol (B) being different from polyacrylate polyol (A) and comprising at least two free hydroxyl groups.

The polyols (B), if present, are preferably selected from polyester polyols, polyacrylate polyols ((meth)acrylic polyols), polycarbonate polyols, polyether polyols, polyurethane polyols, melamine polyols, and mixtures and hybrids thereof. Such polymers are generally known to the skilled person and are commercially available. More preferably, polyol (B) is selected from polyester polyols, polyacrylate polyols, and mixtures thereof.

Suitable polyester polyols (B) can be obtained, for instance, by the polycondensation of one or more di- and/or higher functional hydroxy compounds with one or more di- and/or higher functional carboxylic acids, optionally in combination with one or more monofunctional carboxylic acids and/or hydroxy compounds. As non-limiting examples, di- and/or higher functional hydroxy compounds can be one or more alcohols selected from ethylene glycol, neopentyl glycol, trimethylol propane, trihydroxyethyl isocyanurate and pentaerythritol. As non-limiting examples, the di- and/or higher functional carboxylic acids are one or more selected from the group consisting of adipic acid, 1,4-cyclohexyl dicarboxylic acid, hexahydrophthalic acid, succinic acid, and functional equivalents thereof. Alternatively, polyester polyols can be prepared from di- and/or higher functional hydroxy compounds and from anhydrides and/or C1-C4 alkyl esters of the acids.

Suitable polyacrylate polyols (B) can be obtained from:
- 10 to 80 wt% of hydroxyalkyl(meth)acrylate monomers (b1), wherein the alkyl group contains from 1 to 20 carbon atoms, preferably from 1 to 12 carbon atoms;
- 0 to 50 wt% of linear alkyl(meth)acrylate monomers (b2) wherein the alkyl group contains from 1 to 20 carbon atoms, preferably from 1 to 12 carbon atoms;
- optionally more than 10 wt% of branched alkyl(meth)acrylate monomers (b3) wherein the alkyl group contains from 3 to 20 carbon atoms, preferably from 3 to 12 carbon atoms;
- 15 to 60 wt% of vinyl monomers (b4), preferably (substituted) styrene; and
- optionally more than 15 wt % of (substituted) cycloaliphatic (meth)acrylate monomers (b5), preferably more than 20 wt%, more preferably more than 30 wt%; preferably the cycloaliphatic group of the (substituted) cycloaliphatic (meth)acrylate (b5), if present, contains from 5 to 16 carbon atoms, more preferably from 6 to 12 carbon atoms;
   more preferably the cycloaliphatic group of the (substituted) cycloaliphatic (meth)acrylate (b5), if present, comprises a (substituted) cycloalkyl moiety, a (substituted) bicyclo[x.y.z]alkyl moiety or a (substituted) tricyclo[x.y.z₁.z₂]alkyl moiety (the sum of x + y + z + 2, or x + y + z₁ + z₂ + 2 being equal to the total number of carbon atoms in the cycloaliphatic moiety);
- optionally from 0 to 7 wt% (meth)acrylic acid (b6), preferably from 0 to 5 wt% (meth)acrylic acid, more preferably from 0 to 3 wt% (meth)acrylic acid, even more preferably from 0 to 1 wt% (meth)acrylic acid, most preferably the polyacrylate polyol (B) is substantially free from (meth)acrylic acid (i.e. not containing (meth)acrylic acid);
   based on the sum of (b1), (b2), (b4), and, if present, (b3), (b5) and (b6).

In the same way as described above for acrylic polyol (A), the acrylic polyol (B) can be obtained, preferably in the presence of a free radical initiator, by the (co)polymerization of the above listed monomers and their amounts.

Non-limiting examples of (substituted) cycloaliphatic (meth)acrylate monomers (b5) containing a cycloaliphatic group with from 5 to 16 carbon atoms are (substituted) cyclopentyl (meth)acrylate, (substituted) cyclohexyl (meth)acrylate, (substituted) cycloheptyl (meth)acrylate, 3,3,5-trimethylcyclohexyl (meth)acrylate, isobornyl (meth)acrylate, (substituted) norbornyl (meth)acrylate, isomers of bicyclo[2.2.1]hept-5-en-2-yl)methyl (meth)acrylate, (substituted) adamantyl (meth)acrylate, (substituted) dicyclopentadiene (meth)acrylate, and (substituted) polycyclopentadienyl (meth)acrylate, and mixtures thereof.

If present, the polyol (B) used in the composition according to the invention preferably has a weight averaged molecular weight Mw of at least 700 Dalton, more preferably of at least 1,000 Dalton. The polyol (B) used in the composition according to the invention preferably has a weight averaged molecular weight Mw of less than 10,000 Dalton, more preferably less than 9,000 Dalton. The number averaged molecular weight Mn of polyol (B) is preferably higher than 600 Dalton, more preferably higher than 1,000 Dalton. The number averaged molecular weight Mn of polyol (B) is preferably at most 6,000 Dalton, more preferably at most 5,000 Dalton. The weight averaged molecular weight Mw and number averaged molecular weight Mn are determined according to ASTM D 3593 standard by Gel Permeation Chromatography using polystyrene standards, more particularly using size exclusion chromatography.

The polydispersity, defined as Mw/Mn, of polyol (B) used in the composition of the invention (if present) is preferably less than 5, more preferably less than 4, most preferably less than 3.

The glass transition temperature Tg of polyol (B) used in the composition of the invention (if present) is preferably higher than -70°C, more preferably higher than -60°C, most preferably higher than -50°C. The glass transition temperature of polyol (B) preferably does not exceed 90°C, more preferably does not exceed 75°C. The Tg is measured using Mettler DSC 822E calorimeter according to DIN EN ISO 16805 and ISO 11357.

If present, the polyol (B) used in the composition according to the present invention preferably has a hydroxyl value in the range of 40 to 400 mg KOH per gram of polyol (B), more preferred in the range of 50 to 300 mg KOH per gram of polyol (B) and most preferred in the range of 80 to 250 mg KOH per gram of polyol (B). The hydroxyl value is measured according to the method ASTM E222-17 standard.

The acid value (AV) of polyol (B) used in the composition of the invention (if present) is preferably lower than 20 mg KOH per gram of polyol (B), preferably lower than 15 mg KOH per gram of polyol (B), more preferably lower than 10 than mg KOH per gram of polyol (B).

If present, the polyol (B) used in the composition according to the present invention preferably has a hydroxyl value in the range of 40 to 400 mg KOH per gram of polyol (B) and/or an acid value of between 0 and 20 mg KOH per gram of polyol (B).

If present, the polyol (B) is preferably present in the composition at a level in the range of 0 to 90, more preferably in the range of 10 to 80, most preferably in the range of 20 to 70, percent by weight based on the total amount of polyacrylate polyol (A), polyol (B) if present, crosslinker (C), catalyst (D), and, if present, pot life extender (E).

The crosslinkable composition of the invention comprises at least one polyisocyanate crosslinker (C), preferably comprising at least two free -NCO (isocyanate) groups. The crosslinker (C) is usually selected from (cyclo)aliphatic and/or aromatic polyisocyanates comprising at least 2 -NCO groups and mixtures thereof. The crosslinker (C) is preferably selected from hexamethylene diisocyanate, 2,4,4-trimethyl hexamethylene diisocyanate, 1,2-cyclohexylene diisocyanate, 1,4-cyclohexylene diisocyanate, 4,4'-dicyclohexylene diisocyanate methane, 3,3'-dimethyl-4,4'-dicyclohexylene diisocyanate methane, norbornane diisocyanate, m-and p-phenylene diisocyanate, 1,3- and 1,4-bis (isocyanate methyl) benzene, xylylene diisocyanate, α,α,α',α'-tetramethyl xylylene diisocyanate (TMXDI), 1,5-dimethyl-2,4-bis (isocyanate methyl) benzene, 2,4- and 2,6-toluene diisocyanate, 2,4,6-toluene triisocyanate, 4,4'-diphenylene diisocyanate methane, 4,4'- diphenylene diisocyanate, naphthalene-1,5-diisocyanate, isophorone diisocyanate, 4-isocyanatomethyl-1,8-octamethylene diisocyanate, and mixtures of the aforementioned polyisocyanates. Other preferred isocyanate crosslinkers are adducts of polyisocyanates, e.g., biurets, isocyanurates, imino-oxadiazinediones, allophanates, uretdiones, and mixtures thereof. Examples of such adducts are the adduct of two molecules of hexamethylene diisocyanate or isophorone diisocyanate to a diol such as ethylene glycol, the adduct of 3 molecules of hexamethylene diisocyanate to 1 molecule of water, the adduct of 1 molecule of trimethylol propane to 3 molecules of isophorone diisocyanate, the adduct of 1 molecule of pentaerythritol to 4 molecules of toluene diisocyanate, the isocyanurate of hexamethylene diisocyanate (available under the trade name DESMODUR^{®} (E) N3390 or TOLONATE^{®} HDT-LV), a mixture of the uretdione and the isocyanurate of hexamethylene diisocyanate (available under the trade name DESMODUR^{®} N3400), the allophanate of hexamethylene diisocyanate (available under the trade name DESMODUR^{®} LS 2101), and the isocyanurate of isophorone diisocyanate (available under the trade name VESTANAT^{®} T1890). Furthermore, (co)polymers of isocyanate-functional monomers such as α,α'-dimethyl-m- isopropenyl benzyl isocyanate are suitable for use. If desired, it is also possible to use hydrophobically or hydrophilically modified polyisocyanates to impart specific properties to the coating.

The crosslinker (C) is preferably present in the composition at a level in the range of 10 to 90, more preferably in the range of 20 to 80, most preferably in the range of 30 to 70, percent by weight based on the total amount of polyacrylate polyol (A), polyol (B) if present, crosslinker (C), catalyst (D), and, if present, pot life extender (E).

The crosslinkable composition according to the invention preferably comprises the polyacrylate polyol (A), the polyol (B) and polyisocyanate crosslinker (C) in an amount such that the equivalent ratio of isocyanate-functional groups to hydroxyl groups is between 0.5 and 4.0, preferably between 0.7 and 3.0, and more preferably between 0.8 and 2.5.

The crosslinkable composition of the invention comprises at least one catalyst (D). The catalyst (D) is a catalyst that promotes the reaction of isocyanate groups and hydroxyl groups. More particularly, the catalyst (D) comprised in the crosslinkable composition of the invention catalyzes the reaction between hydroxyl groups of polyacrylate polyol (A), if present polyol (B), and isocyanate groups of crosslinker (C). Such catalysts are known to the skilled person. The catalyst (D) preferably comprises a metal-based catalyst.

Preferred metals in the metal-based catalyst include tin, bismuth, zinc, zirconium, aluminium, or mixtures thereof. Preferred metal-based catalysts are carboxylate complexes of the aforementioned metals, especially tin (II) carboxylates, dialkyl tin (IV) carboxylates, bismuth carboxylates, zinc carboxylates, aluminium carboxylates, or mixtures thereof. More preferred are dimethyl tin dilaurate, dimethyl tin diversatate, dimethyl tin dioleate, dibutyl tin dilaurate, dioctyl tin dilaurate, tin octoate, bismuth 2-ethylhexanoate, bismuth neodecanoate, zinc 2-ethylhexanoate, zinc neodecanoate, or mixtures thereof. Even more preferred metal-based catalysts are dialkyl tin (IV) carboxylates, bismuth carboxylates, or mixtures thereof. Also suitable are dialkyl tin di(alkylsulphides), dialkyl tin maleates, and dialkyl tin acetates. Most preferred metal-based catalysts are dialkyl tin (IV) carboxylates, such as dibutyl tin dilaurate, dioctyl tin dilaurate, or mixtures thereof.

It is also possible to use mixtures and combinations of metal-based catalysts. The catalyst (D) can also comprise a metal-based catalyst as described here above in combination with one or more tertiary amine catalysts. The tertiary amine catalysts are preferably selected from 1,4-diazabicyclo[2.2.2]octane; N,N-dimethylamino propylamine; N-ethylmorpholine; N,N-dimethylcyclohexylamine; N,N,N',N',N"-pentamethyldiethylenetriamine; 3-dimethylamino-N,N-methyl propionamide; derivatives of 2,2,6,6-tetramethylpiperidine; 3-[4-[3-(dimethylamino)-3-oxopropyl]; 3-(dimethylamino)-N,N-dimethylbutanamide, and mixtures of any of those.

The catalyst is preferably used in an amount of 0.01 to 0.4 weight %, more preferably in an amount of 0.01 to 0.35 weight %, even more preferably in an amount of 0.01 to 0.3 weight %, based on the total amount of polyacrylate polyol (A), polyol (B) if present, crosslinker (C), and catalyst (D) (and, if present, pot life extender (E)).

Optionally, the crosslinkable composition according to the invention comprises at least one pot life extender (E). This can be any type of pot life extender and many different types of pot life extenders are known to the skilled person.

Well-known are for example pot life extenders of the types of beta-diketones, beta-keto esters and alpha-hydroxy ketones. Examples of such compounds are 2,4-pentanedione, 1,1,1-trifluoro-2,4-pentanedione, 1,1,1,5,5,5-hexafluoro-2,4-pentanedione, 2,4-hexanedione, 2,4-heptanedione, 5-methyl-2,4-hexanedione 2,4-octanedione, 5,5-dimentyl-2,4-hexanedione, 3-ethyl-2,4-pentanedione, 2,4-decanedione, 2,2-dimethyl-3,5-nonanedione, 3-methyl-2,4-pentanedione, 2,4-tridecanedione, 1-1-cyclohexyl-1,3-butanedione, 5,5-dimethyl-1,3-cyclohexanedione, 1,3-cyclohexanedione, 1-phenyl-1,3-butanedione, 1(4-biphenyl)-1,3-butanedione, 1-phenyl-1,3-pentanedione, 3-benzyl-2,4,-pentanedione, 1-phenyl-5, 5-dimethyl-2,4-hexanedione, 1-phenyl-2-butyl- 1,3-butanedione, 1-phenyl-3-(2-methoxyphenyl)-1,3-propanedione, 1-(4-nitrophenyl)-1,3-butanedione, 1-(2-furyl)-1,3-butanedione, 1-(tetrahydro-2-furyl)-1,3-butanedione, dibenzoylmethane, methyl acetoacetate, ethyl acetoacetate, alpha-methyl ethyl acetoacetate, alpha-n-butyl ethylacetoacetate, alpha-secbutyl ethyl acetoacetate, alpha ethyl methyl acetoacetate, and alpha-ethyl ethyl acetoacetate, alpha-acetyl-butyrolactone, dimedone and 1-hydroxyanthraquinone, benzoin, acetoin and alpha-hydroxy acetophenone. The particularly preferred pot life extender compound of this class is 2,4-pentanedione.

Another class of pot life extender (E) which is particularly useful in the crosslinkable composition according to the invention are carboxylic acids, preferably monofunctional carboxylic acids such as acetic acid, butyric acid, propionic acid, acrylic acid, methacrylic acid, phenylacetic acid, benzoic acid, p-methylbenzoic acid, p-nitrobenzoic acid, p-chlorobenzoic acid, p-methoxybenzoic acid, isononanoic acid, 2-ethylhexanoic acid, pentanoic acid, 3-methylbutanoic acid, neodecanoic acid, versatic acid, 3-hydroxy-2,2-dimethylpropionic acid, 2,2-bis(hydroxymethyl)propionic acid, abietic acid, 1-methyl cyclohexanoic acid, dimetylmalonic acid, ethylmethylmalonic acid, diethylmalonic acid, 2,2-dimethylsuccinic acid, 2,2-diethylsuccinic acid, 2,2-dimethylglutaric acid, 2,2-dimethylpropionic acid, 2,2-dimethylbutyric acid, 2-ethyl-2-methylbutyric acid, 2,2-diethylbutyric acid, 2,2-dimethylvaleric acid, 2-ethyl-2-methylvaleric acid, 2,2-diethylvaleric acid, 2,2-dimethylhexanoic acid, 2,2-diethylhexanoic acid, 2,2-dimethyloctanoic acid, 2-ethyl-2,5-dimethylhexanoic acid, 3-methylisocitric acid, 4,4-dimethylaconitic acid, 1-methylcyclopentane carboxylic acid, 1,2,2-trimethyl-1,3-cyclopentane dicarboxylic acid, 1-methylcyclohexane carboxylic acid, 2-methylbicyclo[2.2.1]-5-heptene-2-carboxylic acid, 2-methyl-7-oxabicyclo[2.2.1]-5-heptene-2-carboxylic acid, 1-adamantane carboxylic acid, bicyclo[2.2.1]heptane-1-carboxylic acid, or bicyclo[2.2.2]octane-1-carboxylic acid, or mixtures thereof. Preferred pot life extenders of this class are acetic acid, propionic acid, isononanoic acid, benzoic acid, or any of the above listed tertiary acids, or mixtures thereof.

Another type of pot life extender (E) particularly useful in the crosslinkable composition according to the invention are compounds of the general formula R-SH, wherein R can be an alkyl, alkenyl, aryl or aralkyl group. The -SH group can be a primary, secondary or tertiary -SH group. R can be a linear, cyclic or branched group and can comprise one or more other functional groups such as hydroxyl groups, primary, secondary or tertiary amine groups, silane or siloxane groups, ether groups, ester groups, carboxylic acid groups. Preferably R is a linear or branched alkyl group of the general formula -CₙH₂ₙ₊₁ wherein n is from 4 to 40, more preferably from 8 to 30. Examples are n-C₁₂H₂₅SH, n-C₁₆H₃₃SH, linear or branched molecules of formula C₁₁H₂₃SH, C₁₂H₂₅SH and C₁₃H₂₇SH, as well as mixtures thereof, and (CH₃)₂(iPr)C-C(CH₃)₂-C(CH₃)₂SH. If R contains more than one other functional groups, these can be different or the same. Particularly hydroxyl or ester groups are preferred as other functional group. In case of R containing an ester group, R preferably has the general formula -(CH₂)ₙ(C=O)O-R'. Herein, n can be chosen in the range of 1 - 20, preferably in the range of 1 - 10 and particularly preferred n is 1 or 2. R' can be any alkyl, alkenyl, aryl or aralkyl group, preferably containing from 1 to 24 carbon atoms, such as butyl, 2-ethylhexyl, iso-octyl, tridecyl, octadecyl. Particularly preferred pot life extenders of this type are compounds of formula HS-(CH₂)ₙ(C=O)O-R', wherein n is 1 or 2 and wherein R' is an alkyl group containing from 3 to 20 carbon atoms.

The pot life extender (E) when chosen from the type R-SH can contain multiple -SH groups. Preferred are compounds of formula HS-(CH₂)ₓ-SH wherein x = 1 to 20, compounds of formula (HSCH₂)₄₋ₘC(CH₂SCH₂CH₂SH)ₘ wherein m = 1 to 4 and similar compounds described in for example patents EP 0665219 and EP 0435306. Other pot life extenders (E) which are particularly preferred are esters from SH-functional acids, especially SH-functional carboxylic acids, and a polyol. Not necessarily limiting to condensation reaction synthesis only, such products can be obtained by the formation of (poly)ester bonds between for example HS(CH₂)ₙCOOH (wherein n = 1 to 20) and a polyol. Preferred are those which are the reaction products of carboxylic acids of formula HS(CH₂)ₙCOOH wherein n is from 1 to 20 and a polyol having an OH-functionality of 2 or more. In this case, the polyol has usually an OH-functionality of 2 or more and can be monomeric, oligomeric or polymeric. Non-limiting examples of such polyols can be glycol, glycerol, trimethylolpropane, neopentyl glycol, pentaerythritol, dipentaerythritol, ethoxylated trimethylolpropane, tri(hydroxyethyl)isocyanurate, castor oil, OH functional polyester, OH functional polyacrylate, polycaprolactone, OH functional polycarbonate, polymers based on diepisulphide monomers as described in patent US 6486298.

Mixtures of different types of pot life extender (E) can be used, such as mixtures of a carboxylic acid and a compound described by formula R-SH.

If present, the pot life extender (E) is preferably selected from beta-diketones, beta-keto esters, alpha-hydroxy ketones, carboxylic acids, compounds of formula R-SH, and mixtures thereof. More preferably, if present, the pot life extender (E) is a carboxylic acid, a compound of formula R-SH, or a mixture thereof.

Preferably, the pot life extender (E) is present in the composition at a level in the range of 0 to 10, more preferred 0.01 to 8, even more preferred 0.1 to 5, most preferred 0.2 to 2, percent by weight based on the total amount of polyacrylate polyol (A), polyol (B) if present, crosslinker (C), catalyst (D) and if present, pot life extender (E).

Preferably, the drying time of the crosslinkable composition of the invention (comprising the polyol component of the invention) is less than 1.5 h, more preferably less than 1.25 h, most preferably less than 1 h, when determined at a temperature of 22 °C. Drying times were determined as follows: in a climatized environment (22 °C, 60% relative humidity) a cotton ball was placed on the drying coating, a weight of 1 kg was placed on the cotton ball for 10 seconds, the weight was removed and the cotton ball was blown away. This procedure was repeated as function of time after having applied the crosslinkable composition. The formed coating was said to be dry when the cotton ball did not leave any marks. This time was recorded as the drying time.

For determination of pot-life, the viscosity of the reacting paint before spraying was measured in time with a DIN Flow Cup 4 according to DIN 53211 and is indicated in seconds. The pot-life is the time required until the viscosity of the paint was doubled relative to the initial viscosity. Preferably, the balance between pot life and drying time (pot life/drying time balance) of the crosslinkable composition of the invention, calculated by dividing the pot life (in minutes) by the drying time (in minutes), is equal to or higher than 1, more preferably higher than 1.2, most preferably higher than 1.4.

The crosslinkable composition may further contain reactive diluents. Reactive diluents generally are monomeric, oligomeric or polymeric compounds, used to reduce the viscosity of polyacrylate polyol (A), and which can react with polyacrylate polyol (A), polyol (B), and/or crosslinker (C). Preferably, reactive diluents are not volatile and therefore do not contribute to the total volatile organic content of the composition. Preferred reactive diluents are monomeric, oligomeric or polymeric compounds comprising one -OH group, or monomeric or oligomeric compounds comprising 2 to 5 -OH groups, or mixtures thereof, which can react with crosslinker (C), usually under the influence of the catalyst (D), and which are used to reduce the viscosity of polyacrylate polyol (A) and/or optional polyol (B). Preferably, the coating composition comprises less than 30 g of reactive diluent per 100 g of polyacrylate polyol (A), more preferably less than 20 g per 100 g of polyol (A), and most preferably 15 g per 100 g of polyacrylate polyol (A) or less.

The composition according to the invention may optionally comprise one or more volatile organic compounds. In general, these are compounds with a boiling point at atmospheric pressure of 200 °C or less, and these are used to dilute the composition to a viscosity suitable to apply the composition. If necessary, a viscosity suitable to apply the composition can therefore be obtained by using a reactive diluent or by using volatile organic compounds, or a mixture of a reactive diluent and volatile organic compounds. Preferably, the crosslinkable composition comprises less than 480 g/l of volatile organic compound based on the total composition, more preferably less than 450 g/l, and most preferably 420 g/l or less. Examples of suitable volatile organic compounds are hydrocarbons, such as toluene, xylene, SOLVESSO^{®} 100, ketones, terpenes, such as dipentene or pine oil, halogenated hydrocarbons, such as dichloromethane, ethers, such as ethylene glycol dimethyl ether, esters, such as ethyl acetate, ethyl propionate, n-butyl acetate or ether esters, such as methoxypropyl acetate or ethoxyethyl propionate. Also mixtures of these compounds can be used.

If so desired, it is possible to include one or more so-called "exempt solvents" in the composition of the invention. An exempt solvent refers to a volatile organic compound that does not participate in an atmospheric photochemical reaction to form smog. It can be an organic solvent, but as it takes so long to react with nitrogen oxides in the presence of sunlight, the Environmental Protection Agency of the United States of America considers its reactivity to be negligible. Examples of exempt solvents that are approved for use in paints and coatings include acetone, methyl acetate, parachlorobenzotrifluoride (commercially available under the name OXSOL^{®} 100), and volatile methyl siloxanes. Also tertiary butyl acetate is being considered as an exempt solvent.

Preferably, the non-volatile content of the composition, referred to as the solid content, is higher than 45 weight-% based on the total composition, more preferably higher than 48 weight-%, and most preferably higher than 50 weight-%. Solid content of the composition refers to the amount of matter that results after applying and curing or crosslinking the composition, after evaporation of the volatile organic compounds. The crosslinkable composition according to the invention may be used and applied without volatile components, in particular when one or more reactive diluents as described here above are used or in applications where higher application viscosity is needed.

In addition to the components described above, other compounds can be present in the crosslinkable composition according to the present invention. Such compounds may be binders other than polyacrylate polyol (A), polyol (B) and/or reactive diluents, and may comprise reactive groups which may be crosslinked with the aforesaid polyol (A), polyol (B) if present, and/or crosslinkers (C). Examples of such other compounds are ketone resins, and latent amino-functional compounds such as oxazolidines, ketimines, aldimines, and diimines. These and other compounds are known to the skilled person and are mentioned, int. al., in US 5214086.

The crosslinkable composition of the invention may further comprise other ingredients, additives or auxiliaries commonly used in coating compositions, such as pigments, dyes, surfactants, pigment dispersion aids, levelling agents, wetting agents, anti-cratering agents, antifoaming agents, matting agents, anti-sagging agents, heat stabilizers, light stabilizers, UV absorbers, antioxidants, radical inhibitors, scratch resistance additives and fillers.

The crosslinkable composition of the invention preferably comprises at least one anti-oxidant (F1). Anti-oxidants used in coating compositions are well known and are generally chosen from phenolic type anti-oxidants, phosphite based anti-oxidants, phosphonite type anti-oxidant, thioethers and blends thereof. The crosslinkable composition according to the invention preferably contains at least one anti-oxidant of the phosphite or phosphonite type. Optionally, the crosslinkable composition also comprises at least one radical scavenger (F2). Radical scavengers used in coating compositions are well known. The crosslinkable composition can comprise any type of radical scavenger; preferably the crosslinkable composition comprises a radical scavenger based on a sterically hindered phenol moiety, more preferably based on esters comprising a 3-(3,5-di-tert-butyl-4-hydroxyphenyl)propionate fragment.

Anti-sagging agents (G) are rheologically active compounds providing thixotropic properties to the crosslinkable composition. These anti-sagging agents are well known and are generally chosen from clay anti-sagging agents, silica-based anti-sagging agents, microgel anti-sagging agents, amide based anti-sagging agents or anti-sagging agents based on polyurea products. If the crosslinkable composition of the invention comprises an anti-sagging agent, preferably the crosslinkable composition comprises an anti-sagging agent based on a polyurea product (in the present description referred to as polyurea anti-sagging agent).

A polyurea anti-sagging agent (G1) is typically prepared by the reaction of a polyisocyanate, its isocyanurate, biuret, uretdione, or other condensed derivatives, with at least one mono-amine, or, alternatively, by the reaction of effectively monoisocyanates (including diisocyanates that have been selectively reacted at one side) with polyamines. The use of the prefix "poly" for polyisocyanates and polyamines indicates that at least two of the mentioned functionalities are present in the respective "poly" compound. It is noted that when a polyurea anti-sagging agent (G1) is prepared by the reaction of amines with a polyisocyanate, it is preferred to prepare a diurea product or a triurea product.

Polyisocyanates are preferably selected from the group consisting of aliphatic, cycloaliphatic, aralkylene, and arylene polyisocyanates, more preferably selected from the group consisting of substituted or unsubstituted linear aliphatic polyisocyanates (and their isocyanurates, biurets, uretdiones, or other condensed derivatives) and substituted or unsubstituted aralkylene and cyclohexylene polyisocyanates. Optionally, the polyisocyanate may contain other functional groups such as for example ether functionalities, ester functionalities or urethane functionalities.

The polyisocyanate usually contains 2 to 40 and preferably 4 to 12 carbon atoms between the NCO groups. The polyisocyanate preferably contains at most four isocyanate groups, more preferably at most three isocyanate groups, and most preferably two isocyanate groups. It is even more preferred to use a symmetrical aliphatic or cyclohexylene diisocyanate.

Suitable examples of diisocyanates are preferably selected from the group consisting of tetramethylene-1,4-diisocyanate, hexamethylene-1,6-diisocyanate (HMDI), trans-cyclohexylene-1,4-diisocyanate, dicyclohexylmethane-4,4'-diisocyanate, 1,5- dimethyl-(2,4-[omega]-diisocyanato methyl) benzene, 1,5-dimethyl(2,4-[omega]-diisocyanatoethyl) benzene, 1,3,5-trimethyl(2,4-[omega]-diisocyanato-methyl) benzene, 1,3,5-triethyl(2,4-[omega]- diisocyanatomethyl) benzene, meta-xylylene diisocyanate, para-xylylene diisocyanate, dicyclohexyl-dimethylmethane-4,4'-diisocyanate, 2,4-toluene diisocyanate, 2,6-toluene diisocyanate, and diphenylmethane-4,4'-diisocyanate (MDI).

Further suitable polyisocyanates are preferably selected from the group consisting of polyisocyanates based on HMDI, including condensed derivatives of HMDI, such as uretdiones, biurets, isocyanurates (trimers), and asymmetrical trimers, etc., many of which are marketed as Desmodur^{®} N and Tolonate^{®} HDB and Tolonate^{®} HDT.

Particularly preferred polyisocyanates are selected from the group consisting of HMDI, its isocyanurate trimer, its biuret (or other condensed derivatives), trans-cyclohexylene-1,4- diisocyanate, para- and meta-xylylene diisocyanate, and toluene diisocyanate.

Most preferably, HMDI, its isocyanurate, or other condensed derivatives are selected.

As will be understood by the person skilled in the art, it is also possible to use conventionally blocked polyisocyanates which generate two or more isocyanates in situ, as long as the blocking agent, after splitting, does not prevent the formation of the rheology modification agent according to the invention. Throughout this document the term "polyisocyanate" is used to denominate all polyisocyanates and polyisocyanate-generating compounds.

In accordance with a preferred embodiment of the present invention the amines used to prepare a polyurea anti-sagging agent (G1) comprise mono-amines. Many monoamines can be used in combination with the polyisocyanates to create polyurea reaction products. Aliphatic as well as aromatic amines can be used, and primary as well as secondary amines. Preferably, primary amines are used; of these n-alkylamines and ether-substituted n-alkylamines are particularly useful in accordance with this invention. Optionally, the amines may comprise other functional groups, such as hydroxy groups, ester groups, urethane groups. Preferred monoamines include n-aliphatic amines, especially n-alkylamines such as hexylamine; cyclohexylamine; benzylamine; 3-methoxypropylamine; S-alpha-methylbenzylamine and 2-phenethylamine, as well as mixtures thereof. Specifically preferred polyurea anti-sagging agents (G1) are the adducts of (condensed derivatives of) HMDI and benzylamine or S-alpha-methylbenzylamine or mixtures of benzylamine and S-alpha-methylbenzylamine, and the adducts of (condensed derivatives of) HMDI and 3-methoxypropylamine. The use of diamines (e.g. ethylenediamine) as component next to mono-amines may also be an option to create high melting point polyureas. The monoamine or part of the monoamine used to prepare a polyurea anti-sagging agent (G1) can be a chiral monoamine and polyurea anti-sagging agents as described in US8207268 are considered to be part of this invention.

The polyurea formation reaction may be carried out in the presence of an inert solvent, for example acetone, methyl isobutyl ketone, N-methyl pyrrolidone, benzene, toluene, xylene, butyl acetate or an aliphatic hydrocarbon such as petroleum ether, alcohols, and water, or mixtures thereof, or in the presence of a binder for the final composition or any other coating formulation component. Here the term "inert" indicates that the solvent does not significantly interfere in the process of polyurea formation, which means that the amount of polyurea formed when solvent is present is at least 80% of the amount produced when no solvent is present.

It will be obvious that if the binder is highly reactive with either the amines or the isocyanate, the binder and that particular susceptible compound cannot be premixed. By the term "highly reactive" is meant here that more than 30% of the susceptible amine or isocyanate reacts with the binder before the amine and the isocyanate are mixed in order to prepare a polurea anti-sagging agent (G).

According to a preferred embodiment of the invention, a polyurea anti-sagging agent (G1) is prepared in the presence of the polyacrylate polyol (A) or of the polyol (B). This can be done by mixing a mixture of the polyacrylate polyol (A), or of the polyol (B), and the isocyanate with the amine (i.e. by adding the amine to a mixture of the polyacrylate polyol (A) or of the polyol (B) and the isocyanate); or by mixing the isocyanate with a mixture of the polyacrylate polyol (A), or of the polyol (B), and the amine components (i.e. by adding the isocyanate to a mixture of the polyacrylate polyol (A) or of the polyol (B) and the amine components); or by mixing two mixtures of polyacrylate polyol (A), or polyol (B), respectively, with the amine components and the NCO-components, respectively (i.e. a mixture of the polyacrylate polyol (A) or of the polyol (B) and the amine components is added to a mixture of the polyacrylate polyol (A) or the polyol (B) and the NCO-components).

It is also possible that small amounts of coreactive components are intentionally employed in the preparation reaction of a polyurea anti-sagging agent (G1) to act as crystallisation modifiers, and more particularly to modify the crystal sizes upon precipitation or the colloidal stability of the resulting crystals. Equally, dispersant and other adjuvants may be present in any of these introduction steps. The preparation of a polyurea anti-sagging agent (G1) may be carried out in any convenient manner, generally with the reactants being vigorously stirred, in a batch or in a continuous process. Amine components may be added to isocyanate or isocyanate may be added to amine components, whichever is most convenient.

Alternatively a polyurea anti-sagging agent (G1) can be formed in a separate reaction and mixed with the polyacrylate polyol (A) or the polyol (B), usually under proper stirring, to form a binder component.

The relative molar ratio amine/isocyanate is usually between 0.9 and 1.1, preferably between 0.95 and 1.05.

The particle size of a polyurea anti-sagging agent (G1) is preferably less than 15 µm as determined by ISO 1524.

Scratch resistance additives usually are additives to improve important coating properties such as car wash resistance, mar resistance or crock resistance. These scratch resistance additives are well-known and are generally chosen from waxes, siloxane modified polyolefins, organic or inorganic polysilazanes, silane modified components, such as silane modified polyol or silane modified crosslinkers, such as silane modified melamines or isocyanates, or scratch resistance additives based on nanoparticle technology. If the crosslinkable composition of the invention comprises a scratch resistance additive, preferably the crosslinkable composition comprises a scratch resistance additive based on nanoparticle technology, more preferably based on modified nanoparticles having an average diameter between 1 and 400 nanometers, most preferably based on nanoparticles as described in EP2106424B1. Particularly preferred is the combination of polyacrylate polyol (A), pot life extender (E) of the type of R-SH and nanoparticles, as described in EP2106424B1, optionally comprising flow and levelling agents known to the skilled person.

The coating composition of the invention preferably comprises:
- from 10 to 90, preferably from 20 to 80, more preferably from 30 to 70, % of weight of polyacrylate polyol (A),
- optionally, from 0 to 90, preferably from 10 to 80, more preferably from 20 to 70, % of weight of polyol (B),
- from 10 to 90, preferably from 20 to 80, more preferably from 30 to 70, % of weight of polyisocyanate crosslinker (C),
- from 0.01 to 0.4, preferably from 0.01 to 0.35, more preferably from 0.01 to 0.3, % of weight of catalyst (D), and
- optionally, from 0 to 10, more preferred 0.01 to 8, even more preferred 0.1 to 5, most preferred 0.2 to 2 % of weight of pot life extender (E),
- optionally, from 0.05 to 1.5, preferably from 0.2 to 1, % of at least one anti-oxidant (F1), more preferably a phosphite or phosphonite type anti-oxidant,
- optionally, from 0.05 to 1.5, preferably from 0.2 to 1, % of at least one radical scavenger (F2), more preferably a radical scavenger based on a sterically hindered phenol,
- optionally, from 0.1 to 8, preferably from 0.2 to 2, more preferably from 0.3 to 1.5 % of an anti-sagging agent (G), preferably a polyurea anti-sagging agent (G1),
based on the total amount of polyacrylate polyol (A), crosslinker (C), catalyst (D), and, if present, polyol (B), pot life extender (E), anti-oxidant (F1), radical scavenger (F2), and/or anti-sagging agent (G).

The coating composition preferably comprises from 20 to 100 weight % of a total amount of polyacrylate polyol (A), polyisocyanate crosslinker (C), catalyst (D), and if present, polyol (B), pot life extender (E), anti-oxidant (F1), radical scavenger (F2), and/or anti-sagging agent (G), based on the total amount of solids of the coating composition.

The crosslinkable composition can suitably be prepared by a process comprising mixing the polyacrylate polyol (A) with the polyol (B), catalyst (D), the pot life extender (E), and/or the anti-sagging agent (G), to form a binder module, and mixing said binder module with the crosslinker (C). The pot life extender (E) can be added separately or, preferably, is added to the binder module. The anti-oxidant (F1) and/or radical scavenger (F2) can be added separately, or, preferably, can be added to the binder module. The anti-sagging agent (G) can be added separately, or, preferably, can be added to the binder module.

As is usual with crosslinkable compositions comprising a hydroxy-functional binder and an isocyanate-functional crosslinker, the composition according to the invention has a limited pot-life. Therefore, the composition is suitably provided as a multi-component composition, for example as a two-component composition or as a three-component composition, wherein the polyols (A) and (B) on the one hand and the crosslinker (C) on the other hand are parts of at least two different components.

Therefore, the invention also relates to a kit of parts for preparing a crosslinkable composition, comprising
i. a binder module comprising at least one polyacrylate polyol (A) and at least one catalyst (D), and optionally at least one polyol (B) and/or pot life extender (E) and/or anti-oxidant (F1) and/or radical scavenger (F2) and/or anti-sagging agent (G), and
ii. a crosslinker module comprising at least one polyisocyanate crosslinker (C).

Alternatively, the kit of parts may comprise
i. a binder module comprising at least one polyacrylate polyol (A) and at least one pot life extender (E), and optionally at least one polyol (B) and/or catalyst (D) and/or anti-oxidant (F1) and/or radical scavenger (F2) and/or anti-sagging agent (G), and
ii. a crosslinker module comprising at least one polyisocyanate crosslinker (C).

Alternatively, the kit of parts may comprise three components, comprising
i. a binder module comprising the polyacrylate polyol (A),
ii. a crosslinker module comprising the crosslinker (C), and
iii. a diluent module comprising a volatile organic diluent,
wherein the catalyst (D), and/or optionally one or more polyols (B), and / or optionally one or more pot life extender (E), and / or optionally one or more anti-oxidants (F1) and/or radical scavengers (F2) and / or optionally at least one anti-sagging agent (G), are distributed over modules i), ii) or iii), and wherein at least one of the modules comprises the catalyst (D).

The other components of the crosslinkable composition may be distributed in different ways over the modules as described above, as long as the modules exhibit the required storage stability. Components of the crosslinkable composition which react with each other upon storage are preferably not combined in one module. If desired, the components of the coating composition may be distributed over even more modules, for example 4 or 5 modules.

The present invention also relates to a binder module comprising at least one polyacrylate polyol (A) and at least one catalyst (D) and, optionally at least one polyol (B) and, optionally at least one pot life extender (E) and, optionally at least one anti-oxidant (F1) and/or radical scavenger (F2) and, optionally at least one anti-sagging agent (G), or to a binder module comprising at least one polyacrylate polyol (A) and at least one pot life extender (E) and, optionally at least one polyol (B) and, optionally at least one catalyst (D) and, optionally at least one anti-oxidant (F1) and/or radical scavenger (F2) and, optionally at least one anti-sagging agent (G) as described here above. The binder module preferably contains at least one anti-oxidant (F1), especially at least one phosphite or phosponite type anti-oxidant and/or one radical scavenger (F2), preferably of the type based on sterically hindered phenol.

The binder module preferably comprises
- from 30 to 90, preferably from 40 to 80, more preferably from 50 to 80, % of weight of polyacrylate polyol (A),
- optionally, from 0 to 60, preferably from 10 to 50, % of weight of polyol (B),
- from 0.01 to 0.4, preferably from 0.01 to 0.35, more preferably from 0.01 to 0.3, % of weight of catalyst (D), and
- optionally, from 0 to 10, more preferred 0.01 to 8, even more preferred 0.1 to 5, most preferred 0.2 to 2 % of weight of pot life extender (E),
- optionally, from 0.1 to 3, preferably from 0.3 to 2 % of at least one anti-oxidant (F1), more preferably a phosphite or phosphonite type anti-oxidant,
- optionally, from 0.1 to 3, preferably from 0.3 to 2 % of at least one radical scavenger (F2), more preferably a type of radical scavenger based on a sterically hindered phenol,
- optionally, from 0.3 to 10 %, preferably from 1 to 10 %, more preferably from 2 to 8 % of an anti-sagging agent (G), preferably a polyurea anti-sagging agent (G1),
based on the total amount of polyacrylate polyol (A), catalyst (D), and, if present, polyol (B), pot life extender (E) and/or anti-oxidant (F1) and/or radical scavenger (F2) and/or anti-sagging agent (G).

Alternatively, the binder module preferably comprises
- from 30 to 90, preferably from 40 to 80, more preferably from 50 to 80, % of weight of polyacrylate polyol (A),
- optionally, from 0 to 60, preferably from 10 to 50, % of weight of polyol (B),
- optionally, from 0.01 to 0.4, preferably from 0.01 to 0.35, more preferably from 0.01 to 0.3, % of weight of catalyst (D), and
- from 0 to 10, more preferred 0.01 to 8, even more preferred 0.1 to 5, most preferred 0.2 to 2 % of weight of pot life extender (E),
- optionally, from 0.1 to 3, preferably from 0.3 to 2 % of at least one anti-oxidant (F1), more preferably a phosphite or phosphonite type anti-oxidant,
- optionally, from 0.1 to 3, preferably from 0.3 to 2 % of at least one radical scavenger (F2), more preferably a type of radical scavenger based on a sterically hindered phenol,
- optionally, from 0.3 to 10 %, preferably from 1 to 10 %, more preferably from 2 to 8 % of an anti-sagging agent (G), preferably a polyurea anti-sagging agent (G1),
based on the total amount of polyacrylate polyol (A), pot life extender (E), and, if present, polyol (B), catalyst (D) and/or anti-oxidant (F1) and/or radical scavenger (F2) and/or anti-sagging agent (G).

Preferably, if present, the pot life extender (E) in the binder module is a carboxylic acid, a compound of formula R-SH, or a mixture thereof.

The crosslinkable composition of the invention can be applied to any substrate. The substrate may be, for example, metal, e.g., iron, steel, tinplate and aluminum, plastic, wood, glass, synthetic material, paper, leather, concrete, or another coating layer. The other coating layer can comprise the coating composition of the current invention or it can be a different coating composition such as a solvent borne or waterborne basecoat or a primer; this primer can be any primer, but those skilled in the art know that often epoxy based or polyurethane based primers are often used in various fields of application. The coating compositions of the current invention show particular utility as clear coats, base coats, pigmented top coats, primers, and fillers.

The crosslinkable composition according to the invention is very suitable for use as a clear coat for Vehicle Refinishes or Automotive OEM. A clear coat is essentially free of pigments and is transparent for visible light. However, the clear coat composition may comprise matting agents, for example silica based matting agents, to control the gloss level of the coating.

When the crosslinkable composition of the invention is a clear coat, it is preferably applied over a colour- and/or effect-imparting base coat. In that case, the clear coat forms the top layer of a multi-layer lacquer coating such as typically applied on the exterior or interior of automobiles. The base coat may be a water borne base coat or a solvent borne base coat. The crosslinkable composition of the current invention is also suitable as pigmented topcoat for Protective Coatings to coat objects such as bridges, pipelines, industrial plants or buildings, oil and gas installations, or ships. The compositions are particularly suitable for finishing and refinishing automobiles and large transportation vehicles, such as trains, trucks, buses, and airplanes. Also, the crosslinkable composition of the current invention can be used in flooring applications. In general, the crosslinkable composition of the current invention can be applied by spraying, brushing, draw-down, pouring, casting or any other method to transfer a composition to a substrate.

Therefore, according to another aspect of the present invention, there is provided a method of providing a coating preferably a coating for at least a part of an object, for example the surface of a transportation vehicle, wherein the method comprises the steps of applying a coating composition according to the invention to at least a part of the object (or substrate), for example the exterior surface of a transportation vehicle, and curing the applied coating composition, usually in a temperature range of 5 to 180 °C, preferably of 5 to 150 °C and more preferably from 5 to 90 °C. The curing step can advantageously be carried out at medium temperatures, for example up to 60 to 80 °C or even at 40 °C or ambient temperature. The crosslinkable composition of the invention can likewise be used in non-coating applications such as adhesives, composites, sealants and inks.

An important trend in the art in the market particularly for OEM clear coats is the desire to bake these clear coats with a method requiring less thermal energy. Typical baking temperatures for methods requiring less thermal energy are normally between 70 and 120 °C, preferably between 80 and 100 °C, whereas for traditional baking methods, baking temperatures are around 140 °C. It is generally known that OEM clear coats baked with such a method known in the art requiring less thermal energy, result in coatings having deteriorated chemical resistance and lower hardness, especially when the solid content of the formulation is high. However, applicants have now found that the present invention is also particularly suitable for (use in) a method requiring less thermal energy. Therefore, according to an alternative embodiment of the present invention, there is provided a method of:
1) applying the crosslinkable composition of the invention to a substrate (for example to at least a part of the exterior surface of a transportation vehicle), said crosslinkable composition comprising:
   - a polyacrylate polyol (A),
   - optionally at least one polyol (B) being different from polyacrylate polyol (A) and comprising at least two free hydroxyl groups,
   - at least one polyisocyanate crosslinker (C) comprising free isocyanate groups,
   - at least one catalyst (D) for catalyzing the reaction between hydroxyl groups of polyacrylate polyol (A), if present polyol (B), and isocyanate groups of crosslinker (C),
      the catalyst (D) being present in an amount of between 0.01 and 0.4 wt% of the total amount of polyacrylate polyol (A), if present polyol (B), crosslinker (C), catalyst (D) and, if present, pot life extender (E); and
   - optionally one or more pot life extender (E),
   - optionally at least one anti-oxidant (F1) and/or radical scavenger (F2), and
   - optionally at least one anti-sagging agent (G), preferably polyurea anti-sagging agent (G1),
      and
2) curing the applied crosslinkable composition at a temperature of between 70 and 120 °C, preferably between 80 and 100 °C.

### EXAMPLES

Glass transition temperature Tg was determined using Mettler DSC 822E calorimeter according to DIN EN ISO 16805 and ISO 11357. More particularly, a 7-12 mg sample was first heated well above the Tg at 120 °C. This temperature was kept for 5 minutes after which the temperature was brought down to at least 60 °C below the expected Tg in 10 minutes. Subsequently, the sample was heated to 120 °C with a temperature increase of 10 °C / minute. The Tg is the temperature at the intersection of the tangent of the baseline and the tangent at the maximum negative slope, in a plot of the heat flow versus temperature.

The molecular weight and molecular weight distribution was determined according to ASTM D 3593 standard by Gel Permeation Chromatography using polystyrene standards, more particularly using size exclusion chromatography. The size-exclusion apparatus used was an Alliance system consisting of a pump, autosampler and Hedegasser (Degasys DG-1210 from Uniflows), equipped with a PLgel 5µm MIXED-C 600 x 7.5 mm Column and a Plgel 5 µm guard column (50 x 7.5 mm - Polymer Laboratories). The Column oven (Separations Analytical Instruments) was set at 30 °C. Tetrahydrofuran (THF - Extra Dry, Biosolve 206347) + 2% acetic acid (Baker 6052) was used as eluent at a flow-rate of 0.8 ml/min. Carbon disulfide (Backer) was used as a marker. A Waters 410 refractive index was used as detector. The injection Volume was 100 µl at a concentration of 1.5 mg/ml. Polystyrene standards (Polymer Laboratories, Easical PS-1, 2010-0501 (M range 580 g/mol - 8.500.000 g/mol) and Easical PS-2, 2010-0601 (M range 580 g/mol - 400.000 g/mol)) were used for calibration using a third order polynomial. Software used for data-analysis was Empower (Waters). In a plot of the eluded weight fraction versus the molecular weight thus obtained, the Mn is molecular weight at which 50% of the molecules have eluded and the Mw is the molecular weight at which 50% of the total mass has eluded.

A polyacrylate polyol (A) (Resin 1) according to the invention was prepared from the polymerization of a mixture of hydroxyethyl methacrylate, hydroxyethyl acrylate, n-butyl acrylate, isobutyl methacrylate, and styrene according to **Table 1.** Resin 1 had a hydroxyl number of 135 mg KOH/g (on non-volatile content), an acid number (AV) of 0.8 mg KOH/g (on non-volatile content), a M_{w} 3,377 and a Mₙ 1,794 (GPC, polystyrene standard), a polydispersity of 1.88 and a Tg of 27 °C. The polyacrylate polyol was dissolved in butyl acetate yielding a solution with a non-volatile content of 74.1% by weight.

Other polyacrylate polyols (A), i.e. Resins 2 to 4, according to the invention, and Resins A to C as comparative examples, were prepared in a similar way as Resin 1. The monomer compositions and typical resin properties of all resins are given in **Table 1.**

**Table 1.**

| | Resin 1 | Resin 2 | Resin 3 | Resin 4 | Resin A | Resin B | Resin C | Resin D | Resin E |
|---|---|---|---|---|---|---|---|---|---|
| HEA | 2.8 | 5.1 | | 5.7 | 23.2 | | 2.8 | 5.1 | 5.7 |
| HEMA | 28.2 | 25.6 | 34.8 | 28.4 | | 31.3 | 28.2 | 25.6 | 28.4 |
| HBA | | | | | 5.9 | | | | |
| BA | 2.0 | 0.2 | | 0.2 | 39.3 | | 0.2 | 0.2 | 0.2 |
| EHA | | | 19.2 | | 13.1 | 29.5 | | | |
| IBMA | 27.0 | 27.3 | | 24.7 | | | 31.6 | 21.5 | 20.7 |
| CHMA | | | | 11.0 | | | 7.2 | 17.6 | 18.0 |
| Styr | 40.0 | 30.0 | 36.0 | 30.0 | 18.5 | 36.0 | 30.0 | 30.0 | 27.0 |
| MMA | | 11.8 | 10.0 | | | 3.2 | | | |
| | | | | | | | | | |
| Mn | 1794 | 1368 | 2011 | 1419 | 2477 | 1810 | 1270 | 1305 | 1284 |
| Mw | 3377 | 2357 | 3713 | 2782 | 5067 | 3280 | 2225 | 2429 | 2244 |
| Disp. | 1.88 | 1.81 | 1.85 | 1.96 | 2.05 | 1.81 | 1.75 | 1.86 | 1.75 |
| OHv | 135 | 135 | 150 | 150 | 135 | 135 | 135 | 135 | 150 |
| AV | 0.8 | 0.7 | 1.1 | 0.7 | 1.1 | 0.7 | 0.6 | 0.5 | 0.7 |
| Tg | 27 | 13 | 12 | 14 | -37 | 0 | 7 | 14 | 11 |

| | | | | | | | | | |
|---|---|---|---|---|---|---|---|---|---|
| with HEA, 2-Hydroxyethyl Acrylate; HEMA, hydroxyethylmethacrylate; HBA, hydroxybutyl acrylate; BA, n-butyl acrylate; EHA, 2-ethylhexyl acrylate; IBMA, iso-butyl methacrylate; CHMA, cyclohexyl Methacrylate; Styr, Styrene; MMA, methylmethacrylate; and disp., polydispersity. | | | | | | | | | |

Clear coat formulations were prepared by preparing the 2 components as shown in **Table 2a and 2b** and then mixing them. The quantities are specified in gram. For each of the compositions, the NCO/OH ratio was kept constant at 1.2 and the level of DBTL catalyst was 0.3% on total resin solids (polyacrylate polyol (A) + crosslinker (C)) for all formulations. Formulations were diluted to a non-volatile content of 58.3%.

For the preparation of formulation E4a according to the invention **(Table 2a),** a polyacrylate polyol (B) was further mixed with Resin 2. The polyacrylate polyol (B) was prepared from the polymerization of a mixture of hydroxyethyl methacrylate, hydroxyethyl acrylate, n-butyl acrylate, styrene, and more than 20% of a (bulky) monomer (b5) (i.e. a (substituted) cycloaliphatic (meth)acrylate monomer (b5) as described in the present description). The polyol (B) had a hydroxyl number of 135 mg KOH/g (on non-volatile content), an acid number of 1 mg KOH/g (on non-volatile content), a Mw of 3,100 Dalton and a Mn of 1,650 Dalton (GPC, polystyrene standard). The prepared polyacrylate polyol (B) was then dissolved in butyl acetate yielding a solution with a non-volatile content of 74% by weight, and further mixed with Resin 2.

**Table 2a.**

| | E1 | E2 | E3 | E4 | E4a |
|---|---|---|---|---|---|
| **Component 1** | | | | | |
| Resin 1 | 515.5 | | | | |
| Resin 2 | | 517.6 | | | 266.2 |
| Resin 3 | | | 493.1 | | |
| Resin 4 | | | | 492.4 | |
| Resin A | | | | | |
| Resin B | | | | | |
| Resin C | | | | | |
| Resin D | | | | | |
| Resin E | | | | | |
| Polyol B | | | | | 261.9 |
| 2,2-dimethylpropionic acid | 3.5 | 3.5 | 3.3 | 3.3 | 0.7 |
| C-(CH₂OC(=O)CH₂CH₂SH)₄ | 1.5 | 1.5 | 1.5 | 1.5 | 2.0 |
| LANKROMARK^{™} LE 571 | 3.1 | 3.1 | 3.0 | 3.0 | 3.2 |
| TINUVIN^{®}1130 | 8.8 | 8.8 | 8.8 | 8.8 | 9.0 |
| TINUVIN^{®}292 | 2.9 | 2.9 | 2.9 | 2.9 | 3.0 |
| MODAFLOW^{®} Lambda, 50% in butyl acetate | 1.1 | 1.1 | 1.1 | 1.1 | 1.1 |
| DBTL, 10% in butyl acetate | 17.5 | 17.5 | 17.5 | 17.5 | 15.0 |
| Xylene | 6.3 | 11.5 | 5.0 | 4.9 | 5.7 |
| Dibasic Ester | 5.1 | 5.1 | 5.1 | 5.1 | 5.2 |
| Solvent Naphtha | 45.6 | 45.7 | 45.7 | 45.7 | 46.6 |
| Butyl Acetate | 64.3 | 63.3 | 72.3 | 73.0 | 46.4 |
| | | | | | |

| **Component 2** | | | | | |
|---|---|---|---|---|---|
| TOLONATE^{®} HDT-LV | 201.4 | 201.4 | 215.5 | 215.5 | 207.2 |
| Butyl acetate | 24.7 | 23.4 | 25.0 | 25.0 | 25.2 |
| Xylene | 98.8 | 93.6 | 100.2 | 100.2 | 101.6 |

**Table 2b.**

| | C1 | C2 | C3 | C4 | C5 |
|---|---|---|---|---|---|
| **Component 1** | | | | | |
| Resin 1 | | | | | |
| Resin 2 | | | | | |
| Resin 3 | | | | | |
| Resin 4 | | | | | |
| Resin A | 510.6 | | | | |
| Resin B | | 515.5 | | | |
| Resin C | | | 521.1 | | |
| Resin D | | | | 516.8 | |
| Resin E | | | | | 497.1 |
| Polyol B | | | | | |
| 2,2-dimethylpropionic acid | 3.5 | 3.1 | 3.5 | 3.5 | 3.3 |
| C-(CH₂OC(=O)CH₂CH₂SH)₄ | 1.5 | 1.5 | 1.5 | 1.5 | 1.5 |
| LANKROMARK^{™} LE 571 | 3.1 | 3.1 | 3.1 | 3.1 | 3.0 |
| TINUVIN^{®}1130 | 8.8 | 8.8 | 8.8 | 8.8 | 8.8 |
| TINUVIN^{®}292 | 2.9 | 2.9 | 2.9 | 2.9 | 2.9 |
| MODAFLOW^{®} Lambda, 50% in butyl acetate | 1.1 | 1.1 | 1.1 | 1.1 | 1.1 |
| DBTL, 10% in butyl acetate | 17.5 | 17.5 | 17.5 | 17.5 | 17.5 |
| Xylene | 6.3 | 11.5 | 6.3 | 6.3 | 5.0 |
| Dibasic Ester | 5.1 | 5.1 | 5.1 | 5.1 | 5.1 |
| Solvent Naphtha | 45.6 | 45.7 | 45.6 | 45.6 | 45.7 |
| Butyl Acetate | 69.2 | 65.4 | 58.6 | 62.9 | 68.3 |
| | | | | | |

| **Component 2** | | | | | |
|---|---|---|---|---|---|
| TOLONATE^{®} HDT-LV | 201.4 | 201.4 | 201.4 | 201.4 | 215.5 |
| Butyl acetate | 24.7 | 23.4 | 24.7 | 24.7 | 25.0 |
| Xylene | 98.8 | 93.6 | 98.8 | 98.8 | 100.2 |

TINUVIN^{®}292 is a mixture of two active tertiary amine ingredients: bis(1,2,2,6,6- pentramethyl-4-piperidinyl)sebacate and methyl(1,2,2,6,6-pentamethyl-4- piperidinyl)sebacate.

TINUVIN^{®}1130 is a benzotriazole-based UV absorber.

MODAFLOW^{®} Lambda is an acryl-silicone hybrid flow promoter.

TOLONATE^{®} HDT-LV is a hexamethylene diisocyanate based trimer.

DBTL is a dibutyl tin dilaurate based catalyst commercialized under the name of TINSTAB^{®} BL 277.

Dibasic ester is a mixture of dimethylsuccinate, dimethylglutarate and dimethyladipate.

Solvent Naphtha is a complex combination of hydrocarbons obtained from distillation of aromatic streams, supplied by Brenntag.

LANKROMARK^{™} LE 571 is a tris-alkylphosphite based anti-oxidant.

The formulations were applied on glass by draw-down application at equal dry layer thickness and left to dry at room temperature. Drying time was determined, pot life was measured which enabled calculation of the balance between pot-life and drying time. In addition Persoz hardness after 1 day RT, as well as after 30 minutes at 60 °C plus 4 hours at RT, was measured. More particularly, Persoz hardness was measured in a climatized room at 23°C and 55 +/- 5% relative humidity. Hardness was measured with a Persoz pendulum as described in ASTM D 4366 standard. Results are displayed in **Table 3.**

**Table 3.**

| | E1 | E2 | E3 | E4 | E4a | C1 | C2 | C3 | C4 | C5 |
|---|---|---|---|---|---|---|---|---|---|---|
| Drying time (h:mm) | 0:56 | 1:05 | 0:50 | 0:57 | 1:06 | 0:53 | 0:57 | 1:10 | 1:07 | 1:04 |
| Pot life / drying time balance | 1.8 | 1.6 | 1.8 | 1.6 | 1.3 | 1.7 | 1.6 | 1.4 | 1.5 | 1.4 |
| Hardness after 30 min 60 °C and 4 h RT | 188 | 157 | 180 | 159 | 170 | 72 | 146 | 133 | 141 | 145 |
| Hardness after 1 day RT | 177 | 143 | 159 | 144 | 164 | 86 | 137 | 126 | 126 | 137 |

The data in **Table 3** show that all formulations dried in a similar time around 50 - 70 minutes and all formulations had good pot life / drying time balance being higher than 1. However, the resins and formulations according to the invention (Resins 1 - 4 and formulations E1 - E4) give much higher hardness values compared to the comparative examples C1 - C5 based on Resins A - E. It was particularly surprising that formulation E4 according to the invention, comprising Resin 4 having a lower amount of bulky CHMA compared to Resins D and E, gave harder coatings compared to comparative examples C4 and C5 (based on said Resins D and E). The compositions according to the invention hence result in better-balanced coatings when compared to compositions described in the art.

Further clear coat formulations were prepared by preparing the 2 components as shown in **Table 4** and then mixing them. The quantities are specified in gram. For each of the compositions, the NCO/OH ratio was kept constant at 1.2 and the level of DBTL catalyst was 0.3% on total resin solids (polyacrylate polyol (A) + crosslinker (C)) for all formulations.

The formulations were applied on glass by draw-down application at equal dry layer thickness and left to dry at room temperature or for 30 minutes at 60 °C. Drying time was determined, pot life was measured which enabled calculation of the pot life / drying time balance. In addition Persoz hardness after 1 day RT as well as after 30 minutes at 60 °C plus 1 hour at RT was measured. Results are displayed in **Table 5.**

**Table 4.**

| | E5 | E6 | E7 | C6 | C7 |
|---|---|---|---|---|---|
| **Component 1** | | | | | |
| Resin 1 | 472.0 | | | | |
| Resin 2 | | 473.9 | | | |
| Resin 3 | | | 451.5 | | |
| Resin A | | | | 467.6 | |
| Resin C | | | | | 477.2 |
| Acetic acid | 1.9 | 1.9 | 1.8 | 1.9 | 1.9 |
| C-(CH₂OC(=O)CH₂CH₂SH)₄ | 1.4 | 1.4 | 1.4 | 1.4 | 1.4 |
| TINUVIN^{®}1130 | 8.0 | 8.0 | 8.0 | 8.0 | 8.0 |
| TINUVIN^{®}292 | 2.7 | 2.7 | 2.7 | 2.7 | 2.7 |
| MODAFLOW^{®} Lambda, 50% in butyl acetate | 1.0 | 1.0 | 1.0 | 1.0 | 1.0 |
| DBTL, 10% in butyl acetate | 16.0 | 16.0 | 16.0 | 16.0 | 16.0 |
| Xylene | 5.8 | 10.6 | 4.6 | 5.8 | 5.8 |
| Dibasic Ester | 4.7 | 4.7 | 4.7 | 4.7 | 4.7 |
| Solvent Naphtha | 41.8 | 41.8 | 41.8 | 41.8 | 41.8 |
| Butyl Acetate | 59.3 | 58.3 | 66.3 | 63.6 | 54.0 |
| | | | | | |

| **Component 2** | | | | | |
|---|---|---|---|---|---|
| TOLONATE^{®} HDT-LV | 184.4 | 184.4 | 197.4 | 184.4 | 184.4 |
| Butyl acetate | 22.6 | 21.4 | 22.9 | 22.6 | 22.6 |
| Xylene | 90.4 | 85.7 | 91.7 | 90.4 | 90.4 |

**Table 5.**

| | E5 | E6 | E7 | C6 | C7 |
|---|---|---|---|---|---|
| Drying time (h:mm) | 1:03 | 1:02 | 0:57 | 1:12 | 1:17 |
| Pot life / drying time balance | 1.1 | 1.1 | 1.3 | 0.9 | 0.9 |
| Hardness after 30 min 60 C and 1 h RT | 214 | 206 | 234 | 93 | 176 |
| Hardness after 1 day RT | 175 | 131 | 166 | 89 | 137 |

The data in **Table 5** show that the formulations E5 - E7 according to the invention dried faster, had a better pot life / drying time balance and resulted in harder coatings compared to comparative examples C6 and C7. In conclusion, the compositions according to the invention hence result in better-balanced coatings when compared to compositions described in the art.

Further clear coat formulations were prepared by preparing the 2 components as shown in **Table 6** and then mixing them. The quantities are specified in gram. For each of the compositions, the NCO/OH ratio was kept constant at 1.2 and the level of DBTL catalyst was 0.3% on total resin solids (polyacrylate polyol (A) + crosslinker (C)) for all formulations.

The formulations were applied on glass by draw-down application at equal dry layer thickness and left to dry at room temperature. Persoz hardness after 1 day RT was measured. Results are displayed in **Table 7.**

**Table 6.**

| | E8 | E9 | C8 | C9 |
|---|---|---|---|---|
| **Component 1** | | | | |
| Resin 1 | 471.3 | | | |
| Resin 3 | | 450.7 | | |
| Resin A | | | 466.9 | |
| Resin C | | | | 476.5 |
| 2,2-dimethylbutanoic acid | 3.6 | 3.5 | 3.6 | 3.6 |
| C-(CH₂OC(=O)CH₂CH₂SH)₄ | 1.4 | 1.4 | 1.4 | 1.4 |
| TINUVIN^{®} 1130 | 8.0 | 8.0 | 8.0 | 8.0 |
| TINUVIN^{®} 292 | 2.7 | 2.7 | 2.7 | 2.7 |
| MODAFLOW^{®} Lambda, 50% in butyl acetate | 1.0 | 1.0 | 1.0 | 1.0 |
| DBTL, 10% in butyl acetate | 16.0 | 16.0 | 16.0 | 16.0 |
| Xylene | 5.7 | 4.5 | 5.7 | 5.7 |
| Dibasic Ester | 4.7 | 4.7 | 4.7 | 4.7 |
| Solvent Naphtha | 41.7 | 41.7 | 41.7 | 41.7 |
| Butyl Acetate | 59.0 | 66.3 | 63.2 | 53.6 |
| | | | | |

| **Component 2** | | | | |
|---|---|---|---|---|
| Tolonate^{®} HDT-LV | 184.1 | 197.0 | 184.2 | 184.2 |
| Butyl acetate | 22.6 | 22.9 | 22.6 | 22.6 |
| Xylene | 90.3 | 91.6 | 90.3 | 90.3 |

**Table 7.**

| | E8 | E9 | C8 | C9 |
|---|---|---|---|---|
| Persoz hardness after 1 day RT | 177 | 155 | 86 | 126 |

The crosslinkable compositions in **Table 6** all had similar pot life values and drying times. However, data in **Table 7** show that the formulations E8 - E9 according to the resulted in harder coatings compared to comparative examples C8 and C9. In conclusion, the compositions according to the invention hence result in better-balanced coatings when compared to compositions described in the art.

An OEM clear coat was prepared according to **Table 8,** which was baked with a method requiring less thermal energy.

Polyester resin 1 is a high solid polyester polyol resin solution in butyl acetate with a solid content of 77.6%, Mn of 1,087 Dalton, Mw of 2,221 Dalton, Tg of 7 °C and AV of 4.9 mg KOH per gram of resin.

Polyurea modified polyacrylate resin is a polyol resin solution in butyl acetate with a solid content of 60% based on butyl acrylate, 2-hydroxyethylacrylate, isobutylmethacrylate, 2-hydroxyethylmethacrylate and styrene, with Mn of 2,682 Dalton, Mw of 6,911 Dalton and an AV of 4 mg KOH per gram of resin, and comprising polyurea particles prepared as described in EP1902081B1.

MODAFLOW^{®} 9200 is an acrylic flow modifier.

ADDITOL^{®} XL 123N is a flow agent and defoamer based on a modified silicone oil.

**Table 8.**

| | E10 |
|---|---|
| **Component 1** | |
| Resin 2 | 34.48 |
| Polyester resin 1 | 30.43 |
| Polyurea modified polyacrylate resin | 15.00 |
| 2,2-dimethylbutanoic acid | 0.12 |
| C-(CH₂OC(=O)CH₂CH₂SH)₄ | 0.19 |
| LANKROMARK^{™} LE 571 | 0.27 |
| Butyl acetate | 10.80 |
| Solvent Naphtha | 10.00 |
| MODAFLOW^{®} 9200 | 0.57 |
| ADDITOL^{®} XL 123N | 0.95 |
| Tinuvin^{®} 1130 | 1.50 |
| Tinuvin^{®} 292 | 0.50 |
| DBTL, 10% in butyl acetate | 2.00 |
| | |

| **Component 2** | |
|---|---|
| Tolonate HDT-LV | 38.85 |
| Butyl acetate | 12.95 |

The composition of Example E10 was diluted to 28 s DC4 (after vigorous stirring for 2 minutes) with a 1:1 mixture of Solvent Naphtha and methoxypropyl acetate, and subsequently sprayed on a panel electrocoated with a CED layer and a commercially available waterborne basecoat. The clear coat was cured for 30 minutes at 80 °C and left at room temperature for 2 hours. Subsequently, the clear coat was exposed to a drop of isopropanol for 5 minutes, and no damage to the clear coating was observed.

After 7 days, the clear coating of Example E10 was exposed to several chemicals and heated to a range of temperatures between 30 and 75 °C on a gradient oven. After 30 min, the coating was inspected for visual damage. The temperature at which visual damage was observed is reported in **Table 9.**

**Table 9.**

| **Chemical** | **Temperature for first damage (°C)** |
|---|---|
| Pancreatine | 72 |
| Tree resin | 41 |
| 1% NaOH solution in water | > 75 |
| 1% H₂SO₄ solution in water | 50 |

Other data obtained with the clear coat from Example E10 are shown in **Table 10.**

Wb, Wd, longwave and shortwave were measured using a Byk Wavescan Dual.

The sagging limit was determined by spraying the crosslinkable composition on a tinplate panel of 47 x 30 cm. Halfway over the length, the panel contained 13 holes with a diameter of 1 cm, with a distance of 2.5 cm between the holes. The crosslinkable formulation was sprayed on such a panel with an increasing layer thickness from left to right. The length of each of the tears under the holes and the layer thickness above each hole were determined after curing of the paint. The sag resistance was determined as the layer thickness (in µm) where the (interpolated) tear length was 5 mm.

**Table 10.**

| | |
|---|---|
| Solid content (%) | 58.9 |
| VOC (g/L) | 420 |
| Hardness after 7 days (on WBBC) | 142 |
| Appearance on WBBC (50 µm clearcoat) | |
| Wb | 18.3 |
| Wd | 21.4 |
| longwave | 6.9 |
| shortwave | 15.1 |
| Sag resistance (5 mm tear length) (µm) | 62 |

Subsequently, to 100 grams of the formulation of Example E10, 3 grams of modified nanoparticle dispersion as described in EP2106424B1 was added. The formulation was applied by draw-down on a black base coated substrate. Abrasion resistance was determined by scratching the coating 10 times with equal force with 3M281Q WETORDRY^{™} sanding paper, and was expressed as the ratio of the gloss value at 20° after scratching divided by the gloss value at 20° before scratching. For the formulation of Example E10, an abrasion resistance value of 0.71 was found.

In summary, the data obtained with the clear coat from Example E10 demonstrate that the present invention is particularly suitable for (use in) a method requiring less thermal energy, surprisingly giving excellent chemical resistance with a wide range of different chemicals, excellent appearance and superb sag resistance. In addition, the formulation of Example E10 is VOC compliant.

## Claims

1. A polyol component comprising at least one polyacrylate polyol (A) obtained from:
- 10 to 80 wt% of hydroxyalkyl(meth)acrylate monomers (a1), wherein the alkyl group contains from 1 to 20 carbon atoms;
- 0 to 50 wt% of linear alkyl(meth)acrylate monomers (a2) wherein the alkyl group contains from 1 to 20 carbon atoms;
- more than 10 wt% of a branched alkyl(meth)acrylate monomers (a3) wherein the alkyl group contains from 3 to 20 carbon atoms;
- 15 to 60 wt% of vinyl monomers (a4); and
- optionally from 0 to 15 wt% of (substituted) cycloaliphatic (meth)acrylate monomers (a5), preferably the cycloaliphatic group of the (substituted) cycloaliphatic (meth)acrylate (a5), if present, contains from 5 to 16 carbon atoms;
- optionally from 0 to 1% (meth)acrylic acid (a6);
based on the sum of (a1), (a2), (a3), (a4), and, if present, (a5) and (a6), being 100 wt%;
the polyacrylate polyol (A) having:
- a number averaged molecular weight Mn of between 800 and 2,100 Dalton;
- a weight averaged molecular weight Mw of between 1,500 and 4,000 Dalton;
- an acid value of between 0 and 3.5 mg KOH/g polyol (A); and
- a glass transition temperature Tg of between 8 and 60°C, determined according to DIN EN ISO 16805 and ISO 11357.

2. The polyol component of claim 1, wherein the polyacrylate polyol (A) has a polydispersity of between 1 and 3.

3. The polyol component of claim 1 or 2, wherein the polyacrylate polyol (A) has a hydroxyl value of between 60 and 300 mg KOH/g polyol (A).

4. The polyol component of any one of the preceding claims, wherein the polyacrylate polyol (A) has a Mn of lower than 2,100 Dalton, a Mw of lower than 3,800 Dalton, a polydispersity lower than 2.5, an acid value of between 0 and 3 mg KOH/g polyol (A) and a glass transition temperature higher than 10 °C.

5. The polyol component of claim 4, wherein the polyacrylate polyol (A) has a Mn of lower than 1,700 Dalton, a Mw of lower than 3,500 Dalton, a polydispersity lower than 2, an acid value of between 0 and 1.5 mg KOH/g polyol (A) and a glass transition temperature of 12 °C or higher.

6. The polyol component of any one of the preceding claims, comprising an anti-sagging agent (G), preferably a polyurea anti-sagging agent (G1), the polyurea anti-sagging agent preferably being prepared from the reaction of a polyisocyanate with a monoamine, more preferably from the reaction of benzylamine, alpha-methylbenzylamine, methoxypropyl amine, or mixtures thereof, with hexamethylene diisocyanate, its isocyanurate, or its condensed derivatives.

7. A crosslinkable composition comprising:
a) a polyol component according to any of claims 1 to 6;
b) optionally at least one polyol (B) being different from polyacrylate polyol (A) and comprising at least two free hydroxyl groups;
c) at least one polyisocyanate crosslinker (C) comprising free isocyanate groups;
d) at least one catalyst (D) for catalyzing the reaction between hydroxyl groups of polyacrylate polyol (A), if present polyol (B), and isocyanate groups of crosslinker (C),
the catalyst (D) being present in an amount of between 0.01 and 0.4 wt% of the total amount of polyacrylate polyol (A), if present polyol (B), crosslinker (C), catalyst (D) and, if present, pot life extender (E), anti-oxidant (F1), radical scavenger (F2), and/or anti-sagging agent (G); and
e) optionally at least one pot life extender (E),
f) optionally at least one anti-oxidant (F1) and/or at least one radical scavenger (F2),
g) optionally at least one anti-sagging agent (G), preferably a polyurea anti-sagging agent (G1).

8. The crosslinkable composition of claim 7, having a drying time of less than 1.5 h at 22°C and having a pot life/drying time balance of at least 1.

9. The crosslinkable composition of claim 7 or 8, wherein polyacrylate polyol (A) is present at a level in the range of 10 to 90 percent by weight based on the total amount of polyacrylate polyol (A), polyol (B) if present, crosslinker (C), catalyst (D) and if present, pot life extender (E).

10. The crosslinkable composition of any one of the claims 7 to 9, wherein polyol (B) is present and is selected from polyester polyols, polyacrylate polyols, and mixtures thereof.

11. The crosslinkable composition of claim 10, wherein polyol (B) has a weight averaged molecular weight Mw of from 700 Dalton to 10,000 Dalton, and a glass transition temperature Tg between -70 °C and 90 °C.

12. The crosslinkable composition of claim 10 or 11, wherein polyol (B) has a hydroxyl value in the range of 40 to 400 mg KOH per gram of polyol (B), and/or an acid value of between 0 and 20 mg KOH per gram of polyol (B).

13. The crosslinkable composition of any one of the claims 7 to 12, wherein the catalyst (D) comprises a metal based catalyst, wherein the metal is selected from tin, bismuth, and mixtures thereof.

14. The crosslinkable composition of claim 13, wherein the catalyst (D) is selected from dialkyl tin (IV) dicarboxylates, bismuth carboxylates, and mixtures thereof,

15. The crosslinkable composition of any one of the claims 7 to 14, wherein the pot life extender (E) is present and is selected from beta-diketones, beta-keto esters, alpha-hydroxy ketones, carboxylic acids, compounds of formula R-SH, and mixtures thereof.

16. The crosslinkable composition of claim 15, wherein the pot life extender (E) is
a carboxylic acid;
a compound of formula R-SH wherein R can be an alkyl, alkenyl, aryl or aralkyl group, optionally substituted with one or more other functional groups such as hydroxyl groups, primary, secondary or tertiary amine groups, silane or siloxane groups, ether groups, ester groups, carboxylic acid groups;
a compound of formula HS-(CH₂)ₓ-SH wherein x is from 1 to 20;
a compound of formula (HSCH₂)₄₋ₘC(CH₂SCH₂CH₂SH)ₘ wherein m is from 1 to 4;
a reaction product of carboxylic acids of formula HS(CH₂)ₙCOOH wherein n is from 1 to 20 and a polyol having an OH-functionality of 2 or more;
or a mixture thereof.

17. The crosslinkable composition of any one of the claims 7 to 16 comprising
• from 10 to 90 % of weight of polyacrylate polyol (A),
• optionally, from 0 to 90 % of weight of polyol (B),
• from 10 to 90 % of weight of polyisocyanate crosslinker (C);
• from 0.01 to 0.4 % of weight of catalyst (D), and
• optionally, from 0 to 10 % of weight of pot life extender (E),
• optionally, from 0.05 to 1.5 % of at least one anti-oxidant (F1),
• optionally, from 0.05 to 1.5 % of at least one radical scavenger (F2),
• optionally, from 0.1 to 8 % of an anti-sagging agent (G), preferably a polyurea anti-sagging agent (G1),
based on the total amount of polyacrylate polyol (A), crosslinker (C), catalyst (D), and, if present, polyol (B), pot life extender (E), anti-oxidant (F1), radical scavenger (F2) and/or anti-sagging agent (G).

18. A binder module comprising at least one polyacrylate polyol (A) and at least one pot life extender (E) and, optionally at least one polyol (B) and, optionally at least one catalyst (D) and, optionally at least one anti-oxidant (F1) and/or radical scavenger (F2) and/or anti-sagging agent (G) according to any of the claims 7 to 17.

19. The binder module of claim 18 comprising
• from 30 to 90 % of weight of polyacrylate polyol (A),
• optionally, from 0 to 60 % of weight of polyol (B),
• optionally, from 0.01 to 0.4 % of weight of catalyst (D),
• from 0.01 to 8 % of weight of pot life extender (E), and
• optionally, from 0.1 to 3 % of at least one anti-oxidant (F1),
• optionally, from 0.1 to 3 % of at least one radical scavenger (F2),
• optionally, from 0.3 to 10 % of an anti-sagging agent (G), preferably a polyurea anti-sagging agent (G1),
based on the total amount of polyacrylate polyol (A), pot life extender (E), and, if present, polyol (B), catalyst (D) and/or anti-oxidant (F1) and/or radical scavenger (F2) and/or anti-sagging agent (G).

20. The binder module of claim 18 or 19, wherein the pot life extender (E) is a carboxylic acid, a compound of formula R-SH, or a mixture thereof.

21. A method of providing a coating comprising the steps of applying a crosslinkable composition according to any of the claims 7 to 17 to at least a part of a substrate and curing the applied crosslinkable composition at a temperature in the range of 5 to 180 °C.

## Patentansprüche

1. Polyolkomponente, umfassend mindestens ein Polyacrylatpolyol (A), erhalten aus:
- 10 bis 80 Gew.-% Hydroxyalkyl(meth)acrylatmonomere (a1), wobei die Alkylgruppe 1 bis 20 Kohlenstoffatome enthält;
- 0 bis 50 Gew.-% linearer Alkyl(meth)acrylatmonomere (a2), wobei die Alkylgruppe 1 bis 20 Kohlenstoffatome enthält;
- mehr als 10 Gew.-% verzweigter Alkyl(meth)acrylatmonomere (a3), wobei die Alkylgruppe 3 bis 20 Kohlenstoffatome enthält;
- 15 bis 60 Gew.-% Vinylmonomere (a4); und
- gegebenenfalls 0 bis 15 Gew.-% (substituierter) cycloaliphatischer (Meth)acrylatmonomere (a5), wobei die cycloaliphatische Gruppe des (substituierten) cycloaliphatischen (Meth)acrylats (a5), sofern vorhanden, 5 bis 16 Kohlenstoffatome enthält;
- gegebenenfalls 0 bis 1 % (Meth)acrylsäure (a6);
basierend darauf, dass die Summe von (a1), (a2), (a3), (a4) und, sofern vorhanden, (a5) und (a6), 100 Gew.-% beträgt;
wobei das Polyacrylatpolyol (A):
- ein zahlenmittleres Molekulargewicht Mn zwischen 800 und 2.100 Dalton;
- ein gewichtsmittleres Molekulargewicht Mw zwischen 1.500 und 4.000 Dalton;
- eine Säurezahl zwischen 0 und 3,5 mg KOH/g Polyol (A); und
- eine Glasübergangstemperatur Tg zwischen 8 und 60 °C, bestimmt gemäß DIN EN ISO 16805 und ISO 11357,
aufweist.

2. Polyolkomponente nach Anspruch 1, wobei das Polyacrylatpolyol (A) eine Polydispersität zwischen 1 und 3 aufweist.

3. Polyolkomponente nach Anspruch 1 oder 2, wobei das Polyacrylatpolyol (A) eine Hydroxylzahl zwischen 60 und 300 mg KOH/g Polyol (A) aufweist.

4. Polyolkomponente nach einem der vorstehenden Ansprüche, wobei das Polyacrylatpolyol (A) ein Mn von weniger als 2.100 Dalton, ein Mw von weniger als 3.800 Dalton, eine Polydispersität von weniger als 2,5, eine Säurezahl zwischen 0 und 3 mg KOH/g Polyol (A) und eine Glasübergangstemperatur von mehr als 10 °C aufweist.

5. Polyolkomponente nach Anspruch 4, wobei das Polyacrylatpolyol (A) ein Mn von weniger als 1.700 Dalton, ein Mw von weniger als 3.500 Dalton, eine Polydispersität von weniger als 2, eine Säurezahl zwischen 0 und 1,5 mg KOH/g Polyol (A) und eine Glasübergangstemperatur von 12 °C oder mehr aufweist.

6. Polyolkomponente nach einem der vorstehenden Ansprüche, umfassend ein Antiablaufmittel (G), vorzugsweise ein Polyharnstoff-Antiablaufmittel (G1), wobei das Polyharnstoff-Antiablaufmittel vorzugsweise durch die Umsetzung eines Polyisocyanats mit einem Monoamin, stärker bevorzugt die Umsetzung von Benzylamin, alpha-Methylbenzylamin, Methoxypropylamin oder Gemischen davon mit Hexamethylendiisocyanat, seinem Isocyanurat oder seinen kondensierten Derivaten hergestellt wird.

7. Vernetzbare Zusammensetzung, umfassend:
a) eine Polyolkomponente nach einem der Ansprüche 1 bis 6;
b) gegebenenfalls mindestens ein Polyol (B), das verschieden ist von Polyacrylatpolyol (A) und mindestens zwei freie Hydroxylgruppen umfasst;
c) mindestens einen Polyisocyanat-Vernetzer (C), der freie Isocyanatgruppen umfasst;
d) mindestens einen Katalysator (D) zum Katalysieren der Reaktion zwischen Hydroxylgruppen von Polyacrylatpolyol (A), sofern vorhanden, Polyol (B) und Isocyanatgruppen von Vernetzer (C),
wobei der Katalysator (D) in einer Menge zwischen 0,01 und 0,4 Gew.-% der Gesamtmenge an Polyacrylatpolyol (A), sofern vorhanden, Polyol (B), Vernetzer (C), Katalysator (D) und, sofern vorhanden, Topfzeitverlängerer (E), Antioxidationsmittel (F1), Radikalfänger (F2) und/oder Antiablaufmittel (G) vorliegt; und
e) gegebenenfalls mindestens einen Topfzeitverlängerer (E),
f) gegebenenfalls mindestens ein Antioxidationsmittel (F1) und/oder mindestens einen Radikalfänger (F2),
g) gegebenenfalls mindestens ein Antiablaufmittel (G), vorzugsweise ein Polyharnstoff-Antiablaufmittel (G1).

8. Vernetzbare Zusammensetzung nach Anspruch 7, die eine Trocknungszeit von weniger als 1,5 h bei 22 °C aufweist und ein Topfzeit/Trocknungszeit-Gleichgewicht von mindestens 1 aufweist.

9. Vernetzbare Zusammensetzung nach Anspruch 7 oder 8, wobei Polyacrylatpolyol (A) mit einem Anteil im Bereich von 10 bis 90 Gewichtsprozent, basierend auf der Gesamtmenge an Polyacrylatpolyol (A), Polyol (B), sofern vorhanden, Vernetzer (C), Katalysator (D) und, sofern vorhanden, Topfzeitverlängerer (E), vorliegt.

10. Vernetzbare Zusammensetzung nach einem der Ansprüche 7 bis 9, wobei Polyol (B) vorliegt und aus Polyesterpolyolen, Polyacrylatpolyolen und Gemischen davon ausgewählt ist.

11. Vernetzbare Zusammensetzung nach Anspruch 10, wobei Polyol (B) ein gewichtsmittleres Molekulargewicht Mw von 700 Dalton bis 10.000 Dalton und eine Glasübergangstemperatur Tg zwischen -70 °C und 90 °C aufweist.

12. Vernetzbare Zusammensetzung nach Anspruch 10 oder 11, wobei Polyol (B) eine Hydroxylzahl im Bereich von 40 bis 400 mg KOH pro Gramm Polyol (B) und/oder eine Säurezahl zwischen 0 und 20 mg KOH pro Gramm Polyol (B) aufweist.

13. Vernetzbare Zusammensetzung nach einem der Ansprüche 7 bis 12, wobei der Katalysator (D) einen metallbasierten Katalysator umfasst, wobei das Metall aus Zinn, Wismut und Gemischen davon ausgewählt ist.

14. Vernetzbare Zusammensetzung nach Anspruch 13, wobei der Katalysator (D) aus Dialkylzinn(IV)dicarboxylaten, Wismutcarboxylaten und Gemischen davon ausgewählt ist.

15. Vernetzbare Zusammensetzung nach einem der Ansprüche 7 bis 14, wobei der Topfzeitverlängerer (E) vorliegt und aus beta-Diketonen, beta-Ketoestern, alpha-Hydroxyketonen, Carbonsäuren, Verbindungen der Formel R-SH und Gemischen davon ausgewählt ist.

16. Vernetzbare Zusammensetzung nach Anspruch 15, wobei der Topfzeitverlängerer (E) eine Carbonsäure;
eine Verbindung der Formel R-SH, wobei R eine Alkyl-, Alkenyl-, Aryl- oder Aralkylgruppe sein kann, die gegebenenfalls mit einer oder mehreren anderen funktionellen Gruppen, wie Hydroxylgruppen, primären, sekundären oder tertiären Amingruppen, Silan- oder Siloxangruppen, Ethergruppen, Estergruppen, Carbonsäuregruppen, substituiert ist;
eine Verbindung der Formel HS-(CH₂)ₓ-SH, wobei x 1 bis 20 ist;
eine Verbindung der Formel (HSCH₂)₄₋ₘC(CH₂SCH₂CH₂SH)ₘ, wobei m 1 bis 4 ist;
ein Reaktionsprodukt von Carbonsäuren der Formel HS(CH₂)ₙCOOH, wobei n 1 bis 20 ist, und einem Polyol mit einer OH-Funktionalität von 2 oder mehr;
oder ein Gemisch davon ist.

17. Vernetzbare Zusammensetzung nach einem der Ansprüche 7 bis 16, umfassend
• 10 bis 90 Gew.-% Polyacrylatpolyol (A),
• gegebenenfalls 0 bis 90 Gew.-% Polyol (B),
• 10 bis 90 Gew.-% Polyisocyanat-Vernetzer (C);
• 0,01 bis 0,4 Gew.-% Katalysator (D) und
• gegebenenfalls 0 bis 10 Gew.-% Topfzeitverlängerer (E),
• gegebenenfalls 0,05 bis 1,5 % von mindestens einem Antioxidationsmittel (F1),
• gegebenenfalls 0,05 bis 1,5 % von mindestens einem Radikalfänger (F2),
• gegebenenfalls 0,1 bis 8 % von einem Antiablaufmittel (G), vorzugsweise einem Polyharnstoff-Antiablaufmittel (G1), basierend auf der Gesamtmenge an Polyacrylatpolyol (A), Vernetzer (C), Katalysator (D) und, sofern vorhanden, Polyol (B), Topfzeitverlängerer (E), Antioxidationsmittel (F1), Radikalfänger (F2) und/oder Antiablaufmittel (G).

18. Bindemittelmodul, umfassend mindestens ein Polyacrylatpolyol (A) und mindestens einen Topfzeitverlängerer (E) und gegebenenfalls mindestens ein Polyol (B) und gegebenenfalls mindestens einen Katalysator (D) und gegebenenfalls mindestens ein Antioxidationsmittel (F1) und/oder einen Radikalfänger (F2) und/oder ein Antiablaufmittel (G) nach einem der Ansprüche 7 bis 17.

19. Bindemittelmodul nach Anspruch 18, umfassend
• 30 bis 90 Gew.-% Polyacrylatpolyol (A),
• gegebenenfalls 0 bis 60 Gew.-% Polyol (B),
• gegebenenfalls 0,01 bis 0,4 Gew.-% Katalysator (D),
• 0,01 bis 8 Gew.-% Topfzeitverlängerer (E) und
• gegebenenfalls 0,1 bis 3 % von mindestens einem Antioxidationsmittel (F1),
• gegebenenfalls 0,1 bis 3 % von mindestens einem Radikalfänger (F2),
• gegebenenfalls 0,3 bis 10 % von einem Antiablaufmittel (G), vorzugsweise Polyharnstoff-Antiablaufmittel (G1),
basierend auf der Gesamtmenge an Polyacrylatpolyol (A), Topfzeitverlängerer (E) und, sofern vorhanden, Polyol (B), Katalysator (D) und/oder Antioxidationsmittel (F1) und/oder Radikalfänger (F2) und/oder Antiablaufmittel (G).

20. Bindemittelmodul nach Anspruch 18 oder 19, wobei der Topfzeitverlängerer (E) eine Carbonsäure, eine Verbindung der Formel R-SH oder ein Gemisch davon ist.

21. Verfahren zum Bereitstellen einer Beschichtung, umfassend die Schritte des Auftragens einer vernetzbaren Zusammensetzung nach einem der Ansprüche 7 bis 17 auf zumindest einen Teil eines Substrats und Härten der aufgetragenen vernetzbaren Zusammensetzung bei einer Temperatur im Bereich von 5 bis 180 °C.

## Revendications

1. Composant polyol comprenant au moins un polyacrylate polyol (A) obtenu à partir de :
- 10 à 80 % en poids de monomères de (méth)acrylate d'hydroxyalkyle (a1), dans lequel le groupe alkyle contient de 1 à 20 atomes de carbone ;
- 0 à 50 % en poids de monomères de (méth)acrylate d'alkyle linéaire (a2), dans lequel le groupe alkyle contient de 1 à 20 atomes de carbone ;
- plus de 10 % en poids d'un monomère de (méth)acrylate d'alkyle ramifié (a3), dans lequel le groupe alkyle contient de 3 à 20 atomes de carbone ;
- 15 à 60 % en poids de monomères vinyliques (a4) ; et
- éventuellement de 0 à 15 % en poids de monomères de (méth)acrylate cycloaliphatique (substitué) (a5), de préférence le groupe cycloaliphatique du (méth)acrylate cycloaliphatique (substitué) (a5), s'il est présent, contient de 5 à 16 atomes de carbone ;
- éventuellement de 0 à 1 % d'acide (méth)acrylique (a6) ;
sur la base de la somme de (a1), (a2), (a3), (a4), et, si présent, (a5) et (a6), qui est 100 % en poids ;
le polyacrylate polyol (A) ayant :
- un poids moléculaire moyen en nombre Mn compris entre 800 et 2 100 daltons ;
- un poids moléculaire moyen en poids Mw compris entre 1 500 et 4 000 daltons ;
- un indice d'acide compris entre 0 et 3,5 mg de KOH/g de polyol (A) ; et
- une température de transition vitreuse Tg comprise entre 8 et 60 °C, déterminée selon les normes DIN EN ISO 16805 et ISO 11357.

2. Composant polyol selon la revendication 1, dans lequel le polyacrylate polyol (A) a une polydispersité comprise entre 1 et 3.

3. Composant polyol selon la revendication 1 ou 2, dans lequel le polyacrylate polyol (A) a un indice d'hydroxyle compris entre 60 et 300 mg de KOH/g de polyol (A).

4. Composant polyol selon l'une quelconque des revendications précédentes, dans lequel le polyacrylate polyol (A) a un Mn inférieur à 2 100 daltons, un Mw inférieur à 3 800 daltons, une polydispersité inférieure à 2,5, un indice d'acide compris entre 0 et 3 mg de KOH/g de polyol (A) et une température de transition vitreuse supérieure à 10 °C.

5. Composant polyol selon la revendication 4, dans lequel le polyacrylate polyol (A) a un Mn inférieur à 1 700 daltons, un Mw inférieur à 3 500 daltons, une polydispersité inférieure à 2, un indice d'acide compris entre 0 et 1,5 mg de KOH/g de polyol (A) et une température de transition vitreuse de 12 °C ou plus.

6. Composant polyol selon l'une quelconque des revendications précédentes, comprenant un agent anti-affaissement (G), de préférence un agent anti-affaissement de polyurée (G1), l'agent anti-affaissement de polyurée étant de préférence préparé à partir de la réaction d'un polyisocyanate avec une monoamine, plus préférablement à partir de la réaction de benzylamine, d'alphaméthylbenzylamine, de méthoxypropylamine, ou de leurs mélanges, avec du diisocyanate d'hexaméthylène, son isocyanurate ou ses dérivés condensés.

7. Composition réticulable comprenant :
a) un composant polyol selon l'une quelconque des revendications 1 à 6 ;
b) éventuellement au moins un polyol (B) qui est différent du polyacrylate polyol (A) et comprenant au moins deux groupes hydroxyle libres ;
c) au moins un agent de réticulation de polyisocyanate (C) comprenant des groupes isocyanate libres ;
d) au moins un catalyseur (D) pour catalyser la réaction entre des groupes hydroxyle du polyacrylate polyol (A), un polyol (B) s'il est présent, et des groupes isocyanate de l'agent de réticulation (C),
le catalyseur (D) étant présent en une quantité comprise entre 0,01 et 0,4 % en poids de la quantité totale de polyacrylate polyol (A), du polyol (B) s'il est présent, de l'agent de réticulation (C), du catalyseur (D) et, s'il est présent, d'un agent d'extension de durée de vie en pot (E), d'un antioxydant (F1), d'un agent de piégeage de radicaux (F2) et/ou d'un agent anti-affaissement (G) ; et
e) éventuellement au moins un agent d'extension de durée de vie en pot (E) ;
f) éventuellement au moins un anti-oxydant (F1) et/ou au moins un agent de piégeage de radicaux (F2) ;
g) éventuellement au moins un agent anti-affaissement (G), de préférence un agent anti-affaissement de polyurée (G1).

8. Composition réticulable selon la revendication 7, ayant un temps de séchage inférieur à 1,5 h à 22 °C et ayant un équilibre durée de vie en pot/temps de séchage d'au moins 1.

9. Composition réticulable selon la revendication 7 ou 8, dans laquelle le polyacrylate polyol (A) est présent en une quantité dans la plage de 10 à 90 pour cent en poids sur la base de la quantité totale de polyacrylate polyol (A), de polyol (B) s'il est présent, d'agent de réticulation (C), de catalyseur (D) et, s'il est présent, d'agent d'extension de durée de vie en pot (E).

10. Composition réticulable selon l'une quelconque des revendications 7 à 9, dans laquelle le polyol (B) est présent et est choisi parmi les polyester polyols, les polyacrylate polyols et leurs mélanges.

11. Composition réticulable selon la revendication 10, dans laquelle le polyol (B) a un poids moléculaire moyen en poids Mw de 700 daltons à 10 000 daltons et une température de transition vitreuse Tg comprise entre - 70 °C et 90 °C.

12. Composition réticulable selon la revendication 10 ou 11, dans laquelle le polyol (B) a un indice d'hydroxyle dans la plage de 40 à 400 mg de KOH par gramme de polyol (B), et/ou un indice d'acide compris entre 0 et 20 mg de KOH par gramme de polyol (B).

13. Composition réticulable selon l'une quelconque des revendications 7 à 12, dans laquelle le catalyseur (D) comprend un catalyseur à base de métal, dans lequel le métal est choisi parmi l'étain, le bismuth et leurs mélanges.

14. Composition réticulable selon la revendication 13, dans laquelle le catalyseur (D) est choisi parmi les dicarboxylates de dialkylétain (IV), les carboxylates de bismuth et leurs mélanges.

15. Composition réticulable selon l'une quelconque des revendications 7 à 14, dans laquelle l'agent d'extension de durée de vie en pot (E) est présent et est choisi parmi les bêta-dicétones, les bêta-céto-esters, les alpha-hydroxycétones, les acides carboxyliques, les composés de formule R-SH, et leurs mélanges.

16. Composition réticulable selon la revendication 15, dans laquelle l'agent d'extension de durée de vie en pot (E) est
un acide carboxylique ;
un composé de formule R-SH dans laquelle R peut être un groupe alkyle, alcényle, aryle ou aralkyle, éventuellement substitué par un ou plusieurs autres groupes fonctionnels tels que des groupes hydroxyle, des groupes amine primaire, secondaire ou tertiaire, des groupes silane ou siloxane, des groupes éther, des groupes ester, des groupes acide carboxylique ;
un composé de formule HS-(CH₂)ₓ-SH dans laquelle x est de 1 à 20 ;
un composé de formule (HSCH₂)₄-ₘC(CH₂SCH₂CH₂SH)ₘ dans laquelle m est de 1 à 4 ;
un produit de réaction d'acides carboxyliques de formule HS(CH₂)nCOOH dans laquelle n est de 1 à 20 et d'un polyol ayant une fonctionnalité OH de 2 ou plus ;
ou un mélange de ceux-ci.

17. Composition réticulable selon l'une quelconque des revendications 7 à 16 comprenant
• de 10 à 90 % en poids de polyacrylate polyol (A),
• éventuellement, de 0 à 90 % en poids de polyol (B),
• de 10 à 90 % en poids d'agent de réticulation de polyisocyanate (C) ;
• de 0,01 à 0,4 % en poids de catalyseur (D), et
• éventuellement, de 0 à 10 % en poids de l'agent d'extension de durée de vie en pot (E),
• éventuellement, de 0,05 à 1,5 % d'au moins un antioxydant (F1),
• éventuellement, de 0,05 à 1,5 % d'au moins un agent de piégeage de radicaux (F2),
• éventuellement, de 0,1 à 8 % d'un agent anti-affaissement (G), de préférence un agent anti-affaissement de polyurée (G1),
sur la base de la quantité totale de polyacrylate polyol (A), d'agent de réticulation (C), de catalyseur (D) et, s'il est présent, de polyol (B), d'agent d'extension de durée de vie en pot (E), d'antioxydant (F1), d'agent de piégeage de radicaux (F2) et/ou d'agent anti-affaissement (G).

18. Module liant comprenant au moins un polyacrylate polyol (A) et au moins un agent d'extension de durée de vie en pot (E) et, éventuellement, au moins un polyol (B) et, éventuellement, au moins un catalyseur (D) et, éventuellement, au moins un antioxydant (F1) et/ou un agent de piégeage de radicaux (F2) et/ou un agent anti-affaissement (G) selon l'une quelconque des revendications 7 à 17.

19. Module liant selon la revendication 18 comprenant
• de 30 à 90 % en poids de polyacrylate polyol (A),
• éventuellement, de 0 à 60 % en poids de polyol (B),
• éventuellement, de 0,01 à 0,4 % en poids de catalyseur (D),
• de 0,01 à 8 % en poids d'agent d'extension de durée de vie en pot (E), et
• éventuellement, de 0,1 à 3 % d'au moins un antioxydant (F1),
• éventuellement, de 0,1 à 3 % d'au moins un agent de piégeage de radicaux (F2),
• éventuellement, de 0,3 à 10 % d'un agent anti-affaissement (G), de préférence un agent anti-affaissement de polyurée (G1),
sur la base de la quantité totale de polyacrylate polyol (A), d'agent d'extension de durée de vie en pot (E) et, s'il est présent, de polyol (B), de catalyseur (D) et/ou d'antioxydant (F1) et/ou d'agent de piégeage de radicaux (F2) et/ou d'agent anti-affaissement (G).

20. Module liant selon la revendication 18 ou 19, dans lequel l'agent d'extension de durée de vie en pot (E) est un acide carboxylique, un composé de formule R-SH, ou un mélange de ceux-ci.

21. Procédé de fourniture d'un revêtement comprenant les étapes d'application d'une composition réticulable selon l'une quelconque des revendications 7 à 17 sur au moins une partie d'un substrat et de durcissement de la composition réticulable appliquée à une température dans la plage de 5 à 180 °C.
